(19) Europäisches Patentamt / European Patent Office / Office européen des brevets

(11) **EP 3 156 434 A1**

(12) **EUROPÄISCHE PATENTANMELDUNG**

(43) Veröffentlichungstag:
19.04.2017 Patentblatt 2017/16

(21) Anmeldenummer: 15189377.3

(22) Anmeldetag: 12.10.2015

(51) Int Cl.:
$C08G\ 18/79$ (2006.01)    $B01J\ 13/14$ (2006.01)
$C08G\ 18/24$ (2006.01)    $C08G\ 18/36$ (2006.01)
$B01J\ 35/00$ (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder:
• **Henkel AG & Co. KGaA**
**40589 Düsseldorf (DE)**

• **Max-Planck-Gesellschaft zur Förderung der Wissenschaften e.V.**
**80539 München (DE)**

(72) Erfinder:
• **TADEN, Andreas**
**40597 Düsseldorf (DE)**
• **BIJLARD, Ann-Christine**
**40223 Düsseldorf (DE)**
• **HANSEN, Anne**
**40479 Düsseldorf (DE)**
• **LANDFESTER, Katharina**
**55122 Mainz (DE)**

(54) **NANOKAPSELN ALS THERMOLATENTE POLYMERISATIONSKATALYSATOREN ODER -INITIATOREN**

(57) Die vorliegende Erfindung betrifft ein Verfahren zur Herstellung von speziellen Nanokapseln, die als thermolatente Polymerisationskatalysatoren, insbesondere für die Polymerisation von Polyurethanen, eingesetzt werden können, mittels eines Hochscherverfahrens, wobei das Verfahren umfasst: (i) Emulgieren einer Reaktionsmischung in eine kontinuierliche wässrige Phase, die mindestens einen Stabilisator umfasst, wobei die Reaktionsmischung bezogen auf das Gesamtgewicht der Reaktionsmischung umfasst: (a) 10,0 bis 99,0 Gew.-% einer Monomerenmischung, die bezogen auf das Gesamtgewicht der Monomerenmischung umfasst: (a1) 2,5 bis 19,0 Gew.-% mindestens eines einfach ethylenisch ungesättigten $C_{3\text{-}5}$-Carbonsäure-Monomer; (a2) 76,0 bis 97,5 Gew.-% mindestens eines einfach ethylenisch ungesättigten $C_{3\text{-}5}$-Carbonsäure-$C_{1\text{-}10}$-Alkylester-Monomer; (a3) 0,0 bis 5,0 Gew.-%, mindestens eines Monomers, das mindestens zwei ethylenisch ungesättigte Gruppen trägt; (b) 1,0 bis 70,0 Gew.-% mindestens eines Polymerisationskatalysators oder -initiators; und (c) 0,0 bis 89,0 Gew.-% mindestens eines hydrophoben Freisetzungsmittels, wobei das Freisetzungsmittel vorzugsweise einen Hansen-Parameter $\delta_t$ von kleiner 20 aufweist; und (d) 0,0 bis 10,0 Gew.-% mindestens einer vom Freisetzungsmittel verschiedenen ultrahydrophoben Verbindung; (ii) optional Homogenisieren der Emulsion aus Schritt (i); und (iii) Polymerisieren der Monomere. Die Erfindung betrifft ferner die mittels der beschriebenen Verfahren hergestellten Nanokapseln, deren Verwendung, und Mittel, die diese Nanokapseln enthalten.

**EP 3 156 434 A1**

**Beschreibung**

Die vorliegende Erfindung betrifft ein Verfahren zur Herstellung von speziellen Nanokapseln, die als thermolatente Polymerisationskatalysatoren/-initiatoren, insbesondere für die Polymerisation von Polyurethanen (PU), eingesetzt werden können, mittels eines Hochscherverfahrens, wobei das Verfahren das Herstellen einer Emulsion einer Mischung ethylenisch ungesättigter Monomere und eines Katalysators/Initiators in einer wässrigen Lösung, einen optionalen Homogenisierungsschritt um eine Miniemulsion herzustellen und einen Polymerisierungsschritt umfasst. Die Erfindung betrifft ferner die mittels der beschriebenen Verfahren hergestellten Nanokapseln deren Verwendung und Mittel, die diese Nanokapseln enthalten.

Polyurethane sind weitverbreite Materialien, die in vielfältigen Gebieten Anwendung finden. Insbesondere für Systeme auf Basis von aliphatischen Isocyanaten sind jedoch oftmals Katalysatoren erforderlich, um die Polymerisationsreaktion von Polyurethanen zu beschleunigen und die Härtungstemperaturen zu senken. Überwiegend werden für diesen Zweck Organozinnverbindungen verwendet, wobei Dibutylzinndilaurat (DBTL), der am weitesten verbreitete Katalysator ist. Aufgrund wachsender Bedenken hinsichtlich der Toxizität von DBTL werden aber inzwischen auch andere Zinn-basierte Katalysatoren, wie beispielsweise Zinnneodekanoat, eingesetzt.

Im Allgemeinen sind die eingesetzten Katalysatoren hochreaktiv, was die Topfzeiten der Polyurethan-Materialien drastisch verkürzt. Um diesen Nachteil zu überwinden, sind eine Reihe von Ansätzen bekannt, wie beispielsweise der Einsatz von blockierten Isocyanaten oder von UVhärtbaren Systemen. Diese leiden aber wiederum daran, dass hohe Temperaturen zur Aktivierung erforderlich sind bzw. dass die Einsatzgebiete auf solche beschränkt sind, in denen eine UV-Aktivierung praktikabel ist. Eine weitere Alternative sind thermolatente Katalysatoren, d.h. Katalysatoren mit verzögerter Wirkung, die wärmeaktivierbar sind. Für diesen Zweck wurden beispielsweise Zinn(II)- und Zinn(IV)alkoxykatalysatoren vorgeschlagen (Zöller et al. (2013) Inorganic Chem. 52(4): 1872-82). Diese erfordern aber komplexe Syntheseverfahren. Eine weitere Alternative sind Systeme die auf einer physikalischen Barriere basieren, wobei hierbei Mikrokapseln im Stand der Technik bereits gut etabliert sind. Mikrokapseln haben eine Größe von 1 bis 1000 $\mu$m und werden üblicherweise mechanisch durch Aufbrechen geöffnet, wobei der Inhalt freigesetzt wird. Nachteilig bei Mikrokapseln ist allerdings, dass diese bei der Anwendung dazu neigen zu Koagulieren oder Sedimentieren und der Einsatz auf Anwendungen beschränkt ist, bei denen sich die Größe der Kapseln nicht negativ auswirkt, wie zum Beispiel bei Infusionsprozessen im Composite-Bereich, bei denen die als Verstärkung eingesetzten Fasern die Durchdringung eines Geleges mit einem Mikrokapsel-haltigen Polymerharz verhindern können, indem sie die Mikrokapseln zurückhalten.

Nanokapseln stellen eine Alternative zu den bekannten Mikrokapseln dar. Aufgrund ihrer Größe im Bereich von nur 50 bis 500 nm (z-average aus der dynamischen Lichtstreuung (DLS)), können diese Kapseln aber nicht mechanisch durch Aufbrechen geöffnet werden, sondern müssen derart formuliert werden, dass sie sich als Reaktion auf bestimmte Signale oder Umgebungsbedingungen öffnen. Es ist allerdings schwierig mit Nanokapseln eine hohe Verkapselungseffizienz zu erreichen, was auf die geringe Größe und die Tatsache zurückzuführen ist, dass die dünne Hülle der Nanokapseln ohne spezielle Vorkehrungen bzw. Anpassungen nur sehr begrenzt als Diffusionsbarriere dienen kann.

Der vorliegenden Erfindung lag daher die Aufgabe zugrunde Nanokapseln bereitzustellen, die die bestehenden Nachteile überwinden und als thermolatente Katalysatoren geeignet sind.

Die vorliegende Erfindung löst diese Aufgabe, indem die Nanokapseln in einem Schritt mittels eines kombinierten Emulsions-/Miniemulsions-Polymerisations-Ansatzes aus einer Monomerenmischung sowie einer zu verkapselnden Katalysator-/Initiatorsubstanz und optional einem hydrophoben Freisetzungsmittel hergestellt werden. Die so erhältlichen Nanokapseln haben eine Core-Shell-Morphologie, wobei das aus den Monomeren aufgebaute Polymer die Hülle (shell) und die Katalysator-/Initiatorsubstanz sowie ggf. das Freisetzungsmittel den Kern (core) bildet.

Die so erhältlichen Nanokapseln sind thermolatent, d.h. der Inhalt der Nanokapseln kann durch Erhöhung der Temperatur kontrolliert freigesetzt werden. Die Freisetzung kann dabei über alternative Mechanismen erfolgen. Im ersten Fall ist die Katalysator-/Initiatorsubstanz bei erhöhter Temperatur selbst ausreichend mit der Kapselhülle kompatibel, um die Barriere der Nanokapselhülle zu überwinden (aber bei den Temperaturen, die bei der Verkapselung und Lagerung eingesetzt werden ausreichend inkompatibel um eine Verkapselung zu ermöglichen und eine vorzeitige Freisetzung zu verhindern). Im zweiten Fall wird ein Freisetzungsmittel eingesetzt, dass bei erhöhter Temperatur die Kapselhülle quellen und damit für den Inhalt der Kapsel, d.h. die Katalysator-/Initiatorsubstanz, durchlässig werden lässt. Dafür ist das Freisetzungsmittel bei erhöhter Temperatur mit der Kapselhülle ausreichend kompatibel, um einen weichmachenden Effekt zu haben, aber bei den bei der Herstellung und Lagerung eingesetzten Temperaturen ausreichend inkompatibel, um eine effiziente Verkapselung zu ermöglichen. In einem dritten Fall wird als Freisetzungsmittel ein Treibmittel eingesetzt, wobei das Treibmittel derart gewählt wird, dass es bei einer festgelegten Temperatur verdampft und durch den steigenden Druck im Innern der Nanokapseln diese aufbricht, wodurch der Katalysator freigesetzt wird. Die Nanokapseln zeichnen sich ferner durch eine sehr hohe Verkapselungseffizienz und eine hohe kolloidale Stabilität aus und verhindern die Freisetzung des Katalysators/Initiators unter Standardbedingungen sehr effektiv, so dass damit formulierte PU-Materialien sehr lange Topfzeiten haben.

In einem ersten Aspekt betrifft die Erfindung daher ein Verfahren zur Herstellung von Nanokapseln, enthaltend mindestens einen Polymerisationskatalysator/-initiator, dadurch gekennzeichnet, dass das Verfahren umfasst:

(i) Emulgieren einer Reaktionsmischung in eine kontinuierliche wässrige Phase, insbesondere Wasser, die mindestens einen Stabilisator, insbesondere mindestens ein Tensid, umfasst, wobei die Reaktionsmischung bezogen auf das Gesamtgewicht der Reaktionsmischung umfasst:

(a) 10,0 bis 99,0 Gew.-% einer Monomerenmischung, die bezogen auf das Gesamtgewicht der Monomerenmischung umfasst:

(a1) 2,5 bis 19,0 Gew.-%, insbesondere 5,0 bis 12,0 Gew.-%, mindestens eines einfach ethylenisch ungesättigten $C_{3-5}$-Carbonsäure-Monomers;

(a2) 76,0 bis 97,5 Gew.-%, insbesondere 85,0 bis 95,0 Gew.-%, mindestens eines einfach ethylenisch ungesättigten $C_{3-5}$-Carbonsäure-$C_{1-10}$-Alkylester-Monomers;

(a3) 0,0 bis 5,0 Gew.-%, insbesondere 0,0 bis 3,0 Gew.-%, mindestens eines Monomers, das mindestens zwei ethylenisch ungesättigte Gruppen trägt, vorzugsweise eines Divinylbenzols oder eines Di- oder Triesters eines $C_{2-10}$-Polyols mit ethylenisch ungesättigten $C_{3-5}$-Carbonsäuren, insbesondere eines Di- oder Triesters eines $C_{2-10}$- Alkandiols oder -triols mit ethylenisch ungesättigten $C_{3-5}$-Carbonsäuren,

(b) 1,0 bis 70,0 Gew.-%, vorzugsweise 1,0 bis 30,0 Gew.-%, mindestens eines Polymerisationskatalysators oder -initiators, vorzugsweise eines Katalysators, der die Polyadditionsreaktion von Verbindungen mit Isocyanat-Gruppen und NCO-reaktiven Gruppen zu Polyurethanen katalysiert, insbesondere eine Organozinnverbindung; und

(c) 0,0 bis 89,0 Gew.-% mindestens eines hydrophoben Freisetzungsmittels, wobei das Freisetzungsmittel einen Hansen-Parameter $\delta_t$ von kleiner 20 aufweist; und

(d) 0,0 bis 10,0 Gew.-% mindestens einer vom Freisetzungsmittel verschiedenen ultrahydrophoben Verbindung, vorzugsweise eines, optional fluorierten, $C_{12-28}$- Kohlenwasserstoffs, noch bevorzugter eines $C_{14-26}$-Alkans;

(ii) optional Homogenisieren der Emulsion aus Schritt (i); und

(iii) Polymerisieren der Monomere.

Ein weiter Aspekt richtet sich auf die mittels der oben beschriebenen Verfahren erhältlichen Nanokapseln und deren Verwendung zur Katalyse von Polymerisationsreaktionen, insbesondere von Polyurethanen.

Noch ein Aspekt betrifft Mittel und Zusammensetzungen, die die Nanokapseln der Erfindung enthalten.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Freisetzungsmittel" bedeutet somit beispielsweise mindestens eine Art von Freisetzungsmittel, d.h. dass eine Art von Freisetzungsmittel oder eine Mischung mehrerer verschiedener Freisetzungsmittel verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Emulsion" oder "Miniemulsion", wie hierin austauschbar verwendet, bezieht sich auf eine Öl-in-Wasser (O/W) Emulsion, in der die emulgierte Phase in Form von Tröpfchen oder Partikeln, vorzugsweise mit annähernd sphärischer Form, in der kontinuierlichen Wasserphase vorliegen. Dabei haben die Tröpfchen/Partikel eine gemittelte Größe, bei annähernd sphärischer Form einen gemittelten Durchmesser, im Größenbereich von 50 bis 500 nm, bevorzugt 100 bis 300 nm. Der Ausdruck "Nanokapsel", wie hierin verwendet, bezieht sich auf die mittels der hierin beschriebenen Verfahren hergestellten emulgierten, polymerisierten Partikel. Diese haben die oben angegebene gemittelte Größe im Bereich von 50 bis 500 nm, vorzugsweise 100 bis 300 nm. Die vorstehend genannten gemittelten Werte beziehen sich dabei auf das z-Mittel ("z-average") aus der dynamischen Lichtstreuung gemäß ISO 22412:2008.

Die hierin beschriebene kombinierte Emulsions-/Miniemulsions-Polymerisations-Technik vereinfacht die Synthese der Nanokapseln dadurch, dass die Nukleation im Wesentlichen in den Tröpfchen auftritt und daher die Einführung stark hydrophober Verbindungen möglich wird. Aufgrund der vergleichsweise größeren Mengen an wasserlöslicher (Meth)Acrylsäure können derartige Systeme nicht als klassische Miniemulsions-Systeme aufgefasst werden, sondern sind eher eine Kombination von Emulsions- und Miniemulsions-Polymerisation, die die Vorteile beider Techniken vereint.

In verschiedenen Ausführungsformen der Erfindung werden die Monomere für die Kapselhülle derart gewählt, dass das aus der Monomerenmischung erhältliche Copolymer eine analog zur Fox-Gleichung berechnete theoretische Glasübergangstemperatur $T_g$ von 95°C oder mehr, insbesondere 100°C oder mehr, noch bevorzugter 105°C oder und mehr, aufweist. Insbesondere wenn ein flüchtiges Treibmittel, d.h. mit einem Siedepunkt bis 200°C, verwendet wird, sind diese $T_g$-Werte bevorzugt, um eine ausreichende Barrierewirkung der Kapselhülle sicherzustellen.

"Glasübergangstemperatur" oder "$T_g$", wie hierin verwendet, bezieht sich auf die Temperatur bei der ein gegebenes Polymer von einem erstarrten glasartigen Zustand in einen kautschukähnlichen Zustand übergeht und die Polymersegmentbeweglichkeit erwacht. Sie steht in Relation mit der Steifigkeit und dem freien Volumen eines Polymers und kann experimentell mit bekannten Verfahren, wie beispielsweise der Dynamisch Mechanischen Thermischen Analyse (DMTA) oder der dynamischen Differenzkalorimetrie (DSC) erfolgen. Beide Verfahren sind im Stand der Technik bekannt. Es sei darauf hingewiesen, dass je nach Messverfahren und den verwendeten Messbedingungen bzw. der thermischen Vorgeschichte der Polymerprobe unterschiedliche Glasübergangstemperaturen für ein identisches Polymersystem erhalten werden können. Tatsächlich ist bereits die Angabe einer definierten Temperatur mit einer gewissen Ungenauigkeit behaftet, da der Glasübergang typischerweise innerhalb eines Temperaturbereichs stattfindet. Hinzu kommt, dass Glastemperaturen von Nanokapseln experimentell nur schwer zugänglich sind und sich nicht jedes Bestimmungsverfahren eignet. Die hierin angegebenen Glasübergangstemperaturen werden daher theoretisch berechnet analog zur Fox-Gleichung, sofern nicht anders angeben. Im Folgenden werden die entsprechend berechneten Werte der Glasübergangstemperatur teilweise auch als "geschätzt" bezeichnet. Beim Erreichen bzw. Überschreiten der Glasübergangstemperatur wird die Kapselhülle durch die Erhöhung der Polymerbeweglichkeit mehr und mehr aufgeweitet und kann dadurch nach und nach zumindest einen Teil ihrer Barrierewirkung verlieren, d.h. für den verkapselten Inhalt durchlässiger werden. Die Thermolatenz kann somit zumindest teilweise über die $T_g$ des Hüllpolymers und das Erhöhen der Temperatur über die $T_g$ bewirkt werden.

Die Fox-Gleichung (vgl. T. G. Fox, Bull. Am. Phys. Soc. 1 (1956) S. 123) besagt, dass sich die reziproke Glasübergangstempertur eines Copolymeren über die Gewichtsanteile der eingesetzten Comonomere und die Glasübergangstemperaturen der korrespondierenden Homopolymere der Comonomere berechnen lässt:

$$\frac{1}{T_g} = \sum_{i=1}^{n} \frac{w_i}{T_{g,i}}$$

In der allgemeinen Gleichung repräsentiert n die Anzahl der eingesetzten Monomere, i die Laufzahl über die eingesetzten Monomere, $w_i$ den Massenanteil des jeweiligen Monomers i (in Gew.-%) und $T_{g,i}$ die jeweilige Glasübergangstemperatur des Homopolymers aus den jeweiligen Monomeren i in K (Kelvin).

Die Werte für die Glasübergangstemperaturen der korrespondierenden Homopolymeren sind auch einschlägigen Nachschlagewerken entnehmbar (vgl. J. Brandrup, E. H. Immergut, E. A. Grulke, "Polymer Handbook", 4th edition, Wiley, 2003), für einige ausgewählte Monomere sind die zur Berechnung verwendeten bzw. relevanten korrespondierenden Glasübergangstemperaturen der Homopolymere unten aufgeführt: Methylacrylat (MA), $T_g$ = 10°C Methylmethacrylat (MMA), $T_g$ = 105°C; Ethylacrylat (EA), $T_g$ = -24°C; Ethylmethacrylat (EMA), $T_g$ = 65°C; n-Butylacrylat (BA), $T_g$ = -54°C; n-Butylmethacrylat (BMA), $T_g$ = 20°C; n-Hexylacrylat (HA), $T_g$ = 57°C; n-Hexylmethacrylat (HMA), $T_g$ = -5°C; Styrol (S), $T_g$ = 100°C; Cyclohexylacrylat (CHA), $T_g$ = 19°C; Cyclohexylmethacrylat (CHMA), $T_g$ = 92°C; 2-Ethylhexylacrylat (EHA), $T_g$ = -50°C; 2-Ethylhexylmethacrylat (EHMA), $T_g$ = -10°C; Isobornylacrylat (IBOA), $T_g$ = 94°C; Isobornylmethacrylat (IBOMA), $T_g$ = 110°C; Acrylsäure (AA), $T_g$ = 105°C; Methacrylsäure (MAA), $T_g$ = 228°C.

Es sei darauf hingewiesen, dass im vorliegenden Fall bei Verwendung von mehrfach vinylisch oder ethylenisch ungesättigten, radikalisch polymerisierbaren Monomeren (sogenannte "Verzweiger" oder "Vernetzer") diese nicht mit in die Berechnung der Glasübergangstemperatur einbezogen werden. Die mittels der aufgeführten Gleichung wie oben beschrieben berechneten Werte werden hierin als "theoretisch berechnet analog zur Fox-Gleichung" oder "geschätzt" bezeichnet.

Das hierin beschriebene Verfahren basiert auf einer polymerisationsinduzierten Phasenseparation, die durch die Wechselwirkung mit Wasser bestimmt wird und in welcher eine hydrophobe Verbindung in einer etwas weniger hydrophoben Polymerschale eingeschlossen wird. Die Bildung von Nanokapseln mittels Phasentrennung basiert auf der schlechten Löslichkeit eines Polymers in einer Lösung. Dabei kann beispielsweise eine organische Flüssigkeit, die eingeschlossen werden soll, als Lösungsmittel für die Monomere dienen, wobei dieselbe Flüssigkeit nach der Polymerisation nicht mehr als Lösungsmittel für das Polymer fungieren kann.

In verschiedenen Ausführungsformen der Erfindung beträgt der Hansen-Parameter $\delta_d$ des Polymers der Kapselhülle 15-19, vorzugsweise 16-18, noch bevorzugter ungefähr 17, der Hansen-Parameter $\delta_p$ 10-14, vorzugsweise 11-13, noch bevorzugter ungefähr 12, und der Hansen-Parameter $\delta_h$ 13-17, vorzugsweise 14-16, noch bevorzugter ungefähr 15, insbesondere 15,3. Der Hansen-Parameter $\delta_t$ beträgt vorzugsweise 23-28, vorzugsweise 24-27, noch bevorzugter 25-26. Der Hansen-Parameter ist hierin, sofern nicht anders angegeben, immer in der Einheit MPa$^{1/2}$

angegeben.

Der Hansen-Parameter ist ein in der Polymerchemie weit verbreiteter Parameter zum Vergleich der Löslichkeit bzw. Mischbarkeit von verschiedenen Substanzen. Dieser Parameter wurde von Charles M. Hansen entwickelt, um die Löslichkeit eines Materials in einem anderen vorherzusagen. Dabei wird die Kohäsionsenergie einer Flüssigkeit betrachtet, welche in mindestens drei verschiedene Kräfte bzw. Wechselwirkungen eingeteilt werden kann: (a) Dispersionskräfte zwischen den Molekülen $\delta_d$ (b) Dipolare intermolekulare Kräfte zwischen den Molekülen $\delta_p$ und (c) Wasserstoffbrückenbindungen zwischen den Molekülen $\delta_h$. Diese drei Parameter können zu einem Parameter $\delta_t$ zusammengefasst werden nach der Formel $\delta_t^2 = \delta_d^2 + \delta_p^2 + \delta_h^2$. Je ähnlicher der Hansen-Parameter von unterschiedlichen Materialien ist, desto besser sind diese ineinander mischbar. Sofern nicht anders angegeben, beziehen sich die hierin angegebenen Werte für den Hansen-Parameter auf die Werte wie von Hansen in Hansen Solubility Parameters. A User's Handbook, Vol. 2, Taylor & Francis Group, Boca Raton, 2007 angegeben bzw. berechnet, insbesondere bei Raumtemperatur (20°C). Die Bestimmung der Hansen-Parameter der Kapselhülle erfolgt dabei insbesondere wie in Angew. Chem. Int. Ed. 2015, 54, 327-330 beschrieben.

Für eine Mischung von Lösungsmitteln, können die Hansen-Löslichkeitsparameter mit dem Volumenbruch der beiden Lösunsmittel berechnet werden. Folgende Gleichung kann zur Berechnung des Parameters $\delta_x$ für zwei Lösungsmittel S1 und S2, mit x = h, d oder p genutzt werden:

$$\delta_x = (\phi_1 \delta_{x1}) + (\phi_2 \delta_{x2})$$

In einem 3D Plot repräsentieren die drei Löslichkeitsparameter für ein Lösungsmittel die Koordinaten eines einzelnen Punktes im dreidimensionalen Raum. Für Polymere P stellen die drei Parameter die Koordinaten des Mittelpunkts einer "Löslichkeitskugel" mit dem Radius $R_0$ (Wechselwirkungsradius) dar. Diese Kugel repräsentiert den Bereich, in welchem das Polymer löslich ist (für lineare Polymere) bzw. wo es gequollen werden kann (im Falle eines vernetzten Polymernetzwerkes).

Die Hansen-Löslichkeitsparameter können somit durch Quellungsexperimente in Lösungsmitteln bekannter Hansen-Parameter bestimmt werden. Ist das Polymer löslich bzw. wird es im Lösungsmittel gequollen, so liegt der Hansen-Parameter des Lösungsmittels innerhalb der Löslichkkeitskugel des Polymers. Für zwei Substanzen, zum Beispiel das Lösungsmittel S und das Polymer P kann die "Distanz" $R_a$ zwischen den Löslichkeitsparametern dieser Komponenten mit folgender Gleichung berechnet werden (s. C. M. Hansen, Hansen Solubility. Parameters A User's Handbook, Vol. 2, Taylor & Francis Group, Boca Raton, 2007):

$$(R_a)^2 = 4(\delta_{dS} - \delta_{dP})^2 + (\delta_{pS} - \delta_{pP})^2 + (\delta_{hS} - \delta_{hP})^2$$

Eine hohe Affinität bzw. eine gute Löslichkeit setzt voraus, dass $R_a$ kleiner ist als $R_o$.

Um eine Phasenseparation während der Polymerisation und somit Kern-Schale-Struktur zu erhalten, sollte eine schlechte Löslichkeit des Polymers in dem jeweiligen Kernmaterial gegeben sein. Demzufolge kann die Bestimmung der Hansen-Löslichkeitsparameter des verwendeten Polymers genutzt werden, um eine gute Löslichkeit des Polymers im Kernmaterial zu vermeiden.

Mit dem Radius der Löslichkeitskugel $R_0$ und den Werten für $R_a$ der Kernmaterialien kann die sogenannte relative Energiedifferenz (RED) des betrachteten Systems berechnet werden:

$$RED = R_a/R_0$$

Ein RED-Wert von 0 wird gefunden, wenn die Energiedifferenz bzw. die Differenz der Hansen-Löslichkeitsparameter der verglichenen Materialien 0 beträgt. Ein Wert kleiner als eins weist auf eine hohe Affinität hin, und ein Wert größer als eins deutet auf niedrige Affinität zwischen den Materialien hin. Oder anders gesagt, ein RED-Wert kleiner oder gleich eins weist auf Löslichkeit hin, ein RED-Wert größer als eins auf eine Unverträglichkeit und somit auf eine Nichtmischbarkeit. Demzufolge sollte ein hoher RED-Wert beim Vergleich der Kern und Schale-Substanzen resultieren, um Phasenseparation während der Polymerisation zu erlangen.

In verschiedenen Ausführungsformen der Erfindung erfüllt die zu verkapselnde Verbindung bzw. die zu verkapselnde Mischung von Verbindungen, d.h. der Katalysator/Initiator und ggf. das Freisetzungsmittel sowie etwaig verwendete weitere Bestandteile, die obige Beziehung, so dass RED >1 ist. Insbesondere ist $R_a/R_0 > 1$, mit $R_0 = 8-15$, insbesondere 10-13, vorzugsweise 11-12, noch bevorzugter ungefähr 11,3, am bevorzugtesten 11,3. $R_0$ und $R_a$ sind hierin, sofern nicht anders angegeben, immer in der Einheit $MPa^{1/2}$ angegeben.

In den hierin beschriebenen Verfahren ist die zu verkapselnde Verbindung/Mischung, d.h. der Katalysator/Initiator oder die Kombination aus Freisetzungsmittel, insbesondere Treibmittel, und Katalysator sowie ggf. ultrahydrophober Verbindung, unter Homogenisierungs- und/oder Polymerisationsbedingungen, vorzugsweise bei Raumtemperatur (20°C) und Normaldruck (1013 mbar), flüssig. "Flüssig", wie in diesem Zusammenhang verwendet, schließt alle unter den genannten Bedingungen fließfähige Substanzen ein.

In verschiedenen Ausführungsformen kann es vorteilhaft sein, wenn die Monomere der Monomermischung in der zu verkapselnden Verbindung/Mischung unter den Emulgierungs-/Homogenisierungsbedingungen zumindest teilweise löslich sind. In verschiedenen Ausführungsformen kann die Monomermischung daher als Lösung der Monomere in mindestens einer hydrophoben Verbindung, typischerweise dem Katalysator/Initiator und/oder dem Freisetzungsmittel bzw. Treibmittel, eingesetzt werden. In verschiedenen Ausführungsformen kann die zu verkapselnde Katalysator-/Initiatorverbindung ein Feststoff sein, der in dem Freisetzungsmittel/Treibmittel und ggf. der ultrahydrophoben Verbindung löslich ist. Obwohl nicht erfindungsgemäß bevorzugt können die zu verkapselnde Verbindungsmischung und die Monomere auch in einem organischen Lösungsmittel gelöst werden und die resultierende Lösung in Schritt (i) in der kontinuierlichen Phase emulgiert werden.

Damit die Katalysator-/Initiatorverbindung und/oder das Freisetzungsmittel effektiv verkapselt werden können, ist es erforderlich, dass diese ausreichend hydrophob sind, so dass sie nicht mit dem aus den Monomeren gebildeten Polymer derart interagieren, dass sie es bereits unter Synthese- und Lagerungsbedingungen übermäßig quellen und dadurch stärker permeabel werden lassen.

Es ist daher in verschiedenen Ausführungsformen bevorzugt, dass die Katalysator-/Initiatorverbindung einen Hansen-Parameter $\delta_t$ von weniger als 20, vorzugsweise weniger als 19, insbesondere weniger als 15 hat; und/oder einen Hansen-Parameter $\delta_h$ von weniger als 12, vorzugsweise weniger als 10, noch bevorzugter weniger als 6, insbesondere weniger als 2 hat. In verschiedenen Ausführungsformen kann der mindestens eine Katalysator/Initiator beispielsweise einen Hansen-Parameter $\delta_h$ von 0 haben. In verschiedenen Ausführungsformen der Erfindung erfüllt die Katalysator-/Initiatorverbindung, insbesondere wenn sie ohne Freisetzungsmittel eingesetzt wird, die obige Beziehung zwischen Hansen-Parametern des Hüllpolymers und Hansen-Parametern des Katalysators/Initiators, so dass RED >1 ist. Insbesondere ist $R_a/R_0 > 1$, $_{mit}$ $R_0$ = 8-15, insbesondere 10-13, vorzugsweise 11-12, noch bevorzugter ungefähr 11,3, am bevorzugtesten 11,3.

Es ist ferner bevorzugt, dass die hydrophoben Verbindungen, d.h. das Freisetzungsmittel, der Katalysator/Initiator und die ultrahydrophobe Verbindung, keine stark beeinträchtigende Nebenreaktion bei der radikalischen Polymerisation (z.B. durch Radikalfänger, wie Phenole) bzw. mit den Monomeren (z.B. keine Michael-Reaktion) zeigen. Die hydrophoben Verbindungen sind daher unter den eingesetzten Bedingungen vorzugsweise inert gegenüber den Monomeren und den bei der Polymerisation eingesetzten Reaktanden (mit Ausnahme von bewusst eingesetzten reaktiven Freisetzungsmitteln, die unten genauer beschrieben werden). Eine zu verkapselnde Verbindung kann als übermäßig störend bei der Polymerisation angesehen werden, wenn selbst bei erfolgter Nachinitiierung bzw. Post-Polymerisation (siehe Beschreibung weiter unten) ein Gesamtmonomerumsatz von 80%, vorzugsweise 90% und besonders bevorzugt 95% nicht überschritten wird. Als Bestimmungsmethode kann idealerweise die (Headspace)-Gaschromatographie dienen, die auch zur Bestimmung der Verkapselungseffizienz herangezogen werden kann. Diese Methode erlaubt darüber hinaus nicht nur die quantitative Bestimmung der Freisetzungskinetik, sondern gleichsam die Bestimmung des Umsatzes der meisten Monomere. Sollten in bestimmten Fällen nicht alle eingesetzten Comonomere über chromatographische Verfahren messbar sein (erschwerte Bestimmung des Gesamtmonomerumsatzes), so reicht die quantitative Bestimmung von einzelnen Comonomeren aus, die kumuliert mindestens 50% der Gesamtmonomerenzusammensetzung ausmachen. In diesem Fall gilt eine zu verkapselnde Verbindung als übermäßig störend, wenn der kumulierte Umsatz von mindestens 50% der eingesetzten Monomere < 80%, vorzugsweise < 90% und besonders bevorzugt < 95% beträgt.

In verschiedenen Ausführungsformen ist der verwendete Katalysator oder Initiator eine Verbindung, die die Polymerisationsreaktion von bestimmten Monomeren oder Präpolymeren katalysieren bzw. initiieren kann. Es kann sich beispielsweise um bekannte Olefin-Katalysatoren, einschließlich Metallocene und Liganden/Komplexverbindungen, die beispielsweise Lanthanide, Actinide, Titan, Chrom, Vanadium, Kobalt, Nickel, Zirkon und/oder Eisen enthalten, Organometallverbindungen, wie beispielsweise organische Verbindungen auf Zinn-, Bismuth-, oder Titanbasis, Metathesekatalysatoren (Schrock, Grubbs, Molybdän, Ruthenium), oder auch um organische Verbindungen, wie beispielsweise organische Peroxide oder tertiäre Amine, wie beispielsweise DABCO, DBU, handeln. Besonders bevorzugt sind Katalysatoren für die Polyurethansynthese, beispielsweise Organozinnverbindungen, wie DBTL (Dibutylzinndilaurat), das aus Gründen der Toxizität nicht bevorzugt ist, und insbesondere Zinnneodekanoat (Tributylzinnneodekanoat). Der Katalysator/Initiator ist ferner kein Katalysator/Initiator für die Polymerisation der Monomere, die die Kapselhülle bilden, d.h. von einem solchen Katalysator/Initiator verschieden.

Es ist, wie bereits oben beschrieben bevorzugt, dass die Katalysator-/Initiatorverbindung eine hydrophobe Verbindung ist, d.h. einen wie oben angegebenen Hansen-Parameter aufweist. In solchen Ausführungsformen in denen der Katalysator/Initiator bei erhöhter Temperatur mit der Kapselhülle ausreichend kompatibel ist, um diese zu durchdringen, kann auf die Verwendung eines Freisetzungsmittels verzichtet werden. Der Freisetzungsmechanismus basiert dann zum einen darauf, dass die Nanokapseln in Abhängigkeit von dem $T_g$ des Copolymers temperatursensitiv sind. Bei einer Erhöhung der Temperatur kommt es zu einer höheren Beweglichkeit der Polymerketten in der Schale und dadurch zu einer Aufweitung der Polymerschale, die dadurch durchlässiger wird. Zum anderen hat dann bei erhöhter Temperatur auch der Katalysator/Initiator einen weichmachenden Effekt auf die Kapselhülle. Es ist allerdings bevorzugt, dass der Katalysator/Initiator zusammen mit einem Freisetzungsmittel eingesetzt wird, das diesen Mechanismus unterstützt bzw. zusätzlich als Treibmittel wirkt.

Das Freisetzungsmittel wird in verschiedenen Ausführungsformen so gewählt, dass der Katalysator/Initiator darin ausreichend löslich ist. Die Löslichkeit beträgt für flüssige Verbindungen vorzugsweise 20 g/l bei Raumtemperatur (20°C) bzw. bei festen Verbindung bei einer Temperatur die der Schmelztemperatur der Verbindung $T_m$ + 20°C entspricht. Die Schmelztemperatur kann dabei gemäß der Norm DIN EN ISO 1 1357-3:201 1 mittels DSC bei einer Aufheizrate von 10 K/min bestimmt werden. Um die Löslichkeit zu bestimmen kann ein Metrohm photometer 662 ausgestattet mit einer Messsonde verwendet werden um die Lichtdurchlässigkeit zu bestimmen. Für die Messung wird dann sichtbares Licht (gesamtes Spektrum) über optische Fasern zu der Sonde geleitet, die in die flüssige Probe eingetaucht wird. Das Licht wird von der Sondenspitze abgestrahlt, wandert durch die Probenlösung, wird von einem Spiegel reflektiert und dann über optische Fasern zum Detektor geleitet. Vor Erreichen des Detektors kann ein optischer Filter eingesetzt werden, um die selektive Messung einer bestimmten Wellenlänge zu ermöglichen. Für die vorliegenden Messungen wurde eine Wellenlänge von 600 nm gemessen. Ein Ahlborn Almemo Multimeter wurde verwendet um die Transmissivität digital aufzunehmen (analoger Ausgang des Photometers) und eine Lichtdurchlässigkeit von ≥98 % (bei der gewählten Wellenlänge) wurde als vollständige Löslichkeit angenommen.

Das Freisetzungsmittel ist ferner hydrophob und weist vorzugsweise einen Hansen-Parameter $\delta_t$ von kleiner 20 auf. Es ist dabei besonders bevorzugt, dass das Freisetzungsmittel einen Hansen-Parameter $\delta_t$ von weniger als 19, insbesondere weniger als 15 hat; und/oder einen Hansen-Parameter $\delta_h$ von weniger als 12, vorzugsweise weniger als 10, noch bevorzugter weniger als 6, insbesondere weniger als 2 hat. In verschiedenen Ausführungsformen kann das mindestens eine Freisetzungsmittel beispielsweise einen Hansen-Parameter $\delta_h$ von 0 haben. In verschiedenen Ausführungsformen der Erfindung erfüllt Freisetzungsmittel die obige Beziehung zwischen Hansen-Parametern des Hüllpolymers und Hansen-Parametern des Freisetzungsmittels bzw. der Mischung aus Freisetzungsmittel und Katalysator/Initiator, so dass RED >1 ist. Insbesondere ist $R_a/R_0$>1, mit $R_0$ = 8-15, insbesondere 10-13, vorzugsweise 11-12, noch bevorzugter ungefähr 11,3, am bevorzugtesten 11,3.

In verschiedenen bevorzugten Ausführungsformen ist das Freisetzungsmittel unter Homogenisierungs- und/oder Polymerisationsbedingungen, vorzugsweise bei Raumtemperatur (20°C) und Normaldruck (1013 mbar), flüssig.

In verschiedenen Ausführungsformen kann das Freisetzungsmittel ein reaktives Freisetzungsmittel sein, das bei der Polymerisation der Kapselhülle zumindest teilweise einpolymerisiert wird. Beispiele für geeignete Verbindungen schließen ein, ohne darauf beschränkt zu sein, Rizinusöl, Cardanol und seine Derivate und andere langkettige hydrophobe Polyole und Monoalkohole.

In verschiedenen, besonders bevorzugten Ausführungsformen ist das Freisetzungsmittel ein hydrophobes Treibmittel, vorzugsweise ein Kohlenwasserstoff, mit einem Siedepunkt von 50 bis 200°C, vorzugsweise 60 bis 150°C, noch bevorzugter 80 bis 120°C. Der angegebene Siedepunkt, bezieht sich auf den Siedepunkt unter Standardbedingungen, d.h. bei Normaldruck (1013 mbar). Das Treibmittel ist in verschiedenen Ausführungsformen ein $C_{6-10}$-Kohlenwasserstoff, vorzugsweise ein $C_{6-10}$-Alkan, insbesondere Isooktan (2,2,4-Trimethylpentan), oder eine Mischung der vorgenannten Verbindungen. Das Treibmittel ist vorzugsweise bei Standardbedingungen flüssig und kann dazu dienen, die Monomere und ggf. auch die Katalysatorverbindung darin zu lösen. Die angegebenen Siedepunkte ermöglichen es, die Nanokapseln durch Erwärmen auf Temperaturen oberhalb dieser Siedepunkte aufzubrechen, da dann das Treibmittel verdampft und der steigende Druck die Nanokapseln aufplatzen lässt.

Im Folgenden wird die Erfindung durch Bezugnahme auf bestimmte konkrete Ausführungsformen beschrieben. Es ist jedoch nicht beabsichtigt, dass die Erfindung auf diese Ausführungsformen beschränkt ist, sondern einfach derart angepasst werden kann, indem andere Monomere, Stabilisatoren/Tenside und Initiatoren verwendet werden können. Das gilt im Übrigen auch für die explizit genannten und beispielhaft getesteten Freisetzungs-/Treibmittel und Katalysatoren/Initiatoren. Solche Ausführungsformen liegen ebenfalls innerhalb des Umfangs der Erfindung.

In einem ersten Schritt des erfindungsgemäßen Verfahrens wird eine stabilisierte Emulsion hergestellt. Die Emulsion enthält die oben beschriebene Monomermischung und mindestens einen Stabilisator, insbesondere ein Tensid, den Katalysator/Initiator, optional das Freisetzungsmittel und optional eine oder mehrere ultrahydrophobe Verbindungen in Form einer Emulsion in einem wässrigen Lösungsmittel. Das wässrige Lösungsmittel enthält als Hauptbestandteil (mehr als 50, insbesondere mehr als 80 Vol.-%) Wasser oder kann vollständig aus Wasser bestehen. In verschiedenen Ausführungsformen kann das wässrige Lösungsmittel ein oder mehrere nichtwässrige Lösungsmittel enthalten, beispielsweise ausgewählt aus einwertigen oder mehrwertigen Alkoholen, Alkanolaminen oder Glykolethern, vorausgesetzt, dass diese in den gegebenen Konzentrationsbereichen mit Wasser mischbar sind.

Diese zusätzlichen Lösungsmittel werden vorzugsweise ausgewählt aus Ethanol, n- oder isoPropanol, Butanol, Glycol, Propandiol oder Butandiol, Glycerin, Diglycol, Propyl- oder Butyldiglycol, Hexylenglycol, Ethylenglycolmethylether, Ethylenglycolethylether, Ethylenglycolpropylether, Ethylenglycolmono-n-butylether, Diethylenglycolmethylether, Diethylenglycolethylether, Propylenglycolmethyl-, -ethyl- oder -propylether, Dipropylenglycolmonomethyl- oder -ethylether, Diisopropylenglycolmonomethyl- oder -ethylether, Methoxy-, Ethoxy- oder Butoxytriglycol, 1-Butoxyethoxy-2-propanol, 3-Methyl-3-methoxybutanol, Propylenglycol-t-butylether und Mischungen davon. In dem wässrigen Lösungsmittel können derartige Lösungsmittel in Mengen von zwischen 0,5 und 35 Gew.-%, aber vorzugsweise weniger als 30 Gew.-% und insbesondere weniger als 25 Gew.-% eingesetzt werden.

Die in den beschriebenen Verfahren eingesetzten Monomere sind insbesondere ethylenisch ungesättigte Carbonsäuren und deren Alkylester.

In verschiedenen Ausführungsformen wird das mindestens eine einfach ethylenisch ungesättigte $C_3$-$C_5$-Carbonsäure-Monomer ausgewählt aus Methacrylsäure (MAA), Acrylsäure (AA), Fumarsäure, Methylmaleinsäure, Maleinsäure, Itaconsäure oder Mischungen von zwei oder mehr davon. Besonders bevorzugt sind Methacrylsäure (MAA), Acrylsäure (AA) oder Mischungen davon. Am bevorzugtesten ist Methacrylsäure. Diese werden, bezogen auf die Monomerenmischung, insbesondere in Mengen von 2,5 bis 19 Gew.-%, vorzugsweise 5 bis 12 Gew.-% eingesetzt.

In verschiedenen Ausführungsformen ist das mindestens eine einfach ethylenisch ungesättigte $C_{3\text{-}5}$-Carbonsäure-$C_{1\text{-}10}$-Alkylester-Monomer ein Acrylsäure- oder Methacrylsäurealkylester oder eine Mischung davon. Bevorzugt sind Methacrylsäure-$C_{1\text{-}5}$-Alkylester-Monomere, insbesondere Methacrylsäuremethylester (MMA), Methacrylsäure-n-butylester (BMA) oder eine Mischung daraus. Ganz besonders bevorzugt ist eine Mischung aus Methacrylsäuremethylester und Methacrylsäure-n-butylester, insbesondere im Gewichtsverhältnis von 3,5:1 bis 16:1, vorzugsweise 6:1 bis 16:1. Die Alkylreste können generell geradkettig oder verzweigt sein, sofern nicht konkret angegeben. Diese Monomere werden, bezogen auf die Monomerenmischung, insbesondere in Mengen von 76 bis 97,5 Gew.-%, vorzugsweise 85 bis 95 Gew.-% eingesetzt.

Das Monomer, das mindestens zwei ethylenisch ungesättigte Gruppen trägt, kann allgemein jede Verbindung sein, die zwei ethylenisch ungesättigte Gruppen, beispielsweise zwei Vinylgruppen trägt. Beispiele für geeignete Verbindungen schließen ein, ohne darauf beschränkt zu sein, Divinylaromaten, wie insbesondere Divinylbenzole, oder Mehrfachester eines Polyols mit ethylenisch ungesättigten Carbonsäuren, wie insbesondere Di- oder Triester eines $C_{2\text{-}10}$-Polyols mit ethylenisch ungesättigten $C_{3\text{-}5}$-Carbonsäuren. Bei letzteren handelt es sich in verschiedenen Ausführungsformen um Diester von Methacrylsäure oder Acrylsäure mit 1,3-Propandiol, 1,4-Butandiol oder 1,5-Pentandiol, insbesondere einen Methacrylsäureester von 1,4-Butandiol. Bevorzugt sind Di- und Triacrylate oder Di- und Trimethacrylate von mehrwertigen Alkoholen.

Die vorstehend genannten Verbindungen mit mindestens zwei ethylenisch ungesättigten Gruppen dienen in den Monomermischungen als Vernetzer. Eine derartige dreidimensionale Vernetzung des entstehenden Polymers ist von Bedeutung, um auch beim Quellen des Polymers bei steigendem pH-Wert die strukturelle Integrität der Nanokapsel zu gewährleisten. Die Vernetzer werden bezogen auf die Monomerenmischung in Mengen von bis zu 5 Gew.-%, vorzugsweise bis 4,5 Gew.-%, noch bevorzugter bis 4 Gew.-% eingesetzt.

In verschiedenen Ausführungsformen der Erfindung kann mit der Monomermischung, dem Katalysator/Initiator und optional dem Freisetzungsmittel in Schritt (i) noch eine ultrahydrophobe Verbindung, insbesondere ein $C_{12\text{-}28}$-Kohlenwasserstoff, noch bevorzugter ein $C_{14\text{-}26}$-Alkan, wie beispielsweise Hexadekan, in die kontinuierliche Phase emulgiert werden. Auch $C_{14\text{-}26}$-Monoalkohole oder Monocarbonsäuren oder auch fluorierte Derivate der vorgenannten können geeignet sein. Der Katalysator kann beispielsweise in diesen gelöst vorliegen. In verschiedenen Ausführungsformen kann die ultrahydrophobe Verbindung auch ein polymerisierbar $C_{12\text{-}28}$-Kohlenwasserstoff sein. Mögliche Verbindungen sind, ohne darauf beschränkt zu sein, Lauryl(meth)acrylat (LA bzw. LMA), Tetradecyl(meth)acrylat (TDA bzw. TDMA), Hexadecyl(meth)acrylat (HDA bzw. HDMA), Octadecyl(meth)acrylat (ODA bzw. ODMA), Eicosanyl(meth)acrylat, Behenyl(meth)acrylat und Mischungen davon. Werden solche ultrahydrophoben polymerisierbaren Verbindungen eingesetzt, werden diese nicht in die Berechnung der Glasübergangstemperatur analog zur Fox-Gleichung (siehe oben) einbezogen. Diese ultrahydrophoben Verbindungen sind vom Freisetzungsmittel verschiedene Verbindungen, typischerweise solche die unter Standardbedingungen einen Siedepunkt >200°C aufweisen. "Ultrahydrophob", wie hierin im Zusammenhang mit den vorstehend beschriebenen Verbindungen verwendet, bedeutet, dass die entsprechende Verbindung in Wasser bei 60°C eine Löslichkeit von weniger als 0,001 Gew.-% aufweist, bestimmt mittels des von Chai et al. beschriebenen Verfahrens (Ind. Eng. Chem. Res. (2005), 44, 5256-5258).

In verschiedenen weiteren Ausführungsformen der Erfindung können mit der Monomermischung in Schritt (i) auch noch weitere polymerisierbare Verbindungen, beispielsweise vinylisch ungesättigte Monomere, wie insbesondere Styrol, in die kontinuierliche Phase emulgiert werden. Werden solche zusätzlichen polymerisierbaren Verbindungen eingesetzt, so beträgt die Menge nicht mehr als 50 Gew.-% bezogen auf die Monomermischung wie oben definiert.

In bestimmten bevorzugten Ausführungsformen wird als Monomermischung eine Mischung von:

(a) 2,5 bis 19,0 Gew.-%, insbesondere 5,0 bis 12,0 Gew.-% Methacrylsäure (MAA);
(b) 70,0 bis 80,0 Gew.-%, insbesondere 72,5 bis 80,0 Gew.-%, Methylmethacrylat (MMA);

(c) 6,0 bis 17,5 Gew.-%, insbesondere 5,0 bis 12,5 Gew.-%, n-Butylmethacrylat (BMA); und

(d) 0,0 bis 5,0 Gew.-%, insbesondere 0,5 bis 3 Gew.-%, 1,4-Butandiol-Dimethacrylat (BDDMA) verwendet.

Derartige Mischungen ergeben ein Polymer mit der gewünschten Glasübergangstemperatur (berechnet wie oben beschrieben analog zur Fox-Gleichung), beispielsweise von >95°C, insbesondere >100°C. Gleichzeitig sind diese Monomermischungen hydrophob genug, um stabile Miniemulsionströpfchen zu ergeben.

In Schritt (i) des Verfahrens wird ferner mindestens ein Stabilisator eingesetzt. Der Ausdruck "Stabilisator", wie hierin verwendet, bezieht sich dabei auf eine Klasse von Molekülen, die die Tröpfchen in einer Emulsion stabilisieren können, d.h. Koagulation und Koaleszenz verhindern können. Die Stabilisatormoleküle können sich dazu an die Oberfläche der Tröpfchen anlagern oder mit dieser wechselwirken. Zusätzlich können (polymerisierbare) Stabilisatoren eingesetzt werden, die kovalent mit den eingesetzten Monomeren reagieren können. Werden polymerisierbare Stabilisatoren eingesetzt, werden diese nicht in die Berechnung der Glasübergangstemperatur analog zur Fox-Gleichung (siehe oben) einbezogen. Stabilisatoren enthalten im Allgemeinen einen hydrophilen und einen hydrophoben Anteil, wobei der hydrophobe Teil mit dem Tröpfchen wechselwirkt und der hydrophile Teil zum Lösungsmittel hin ausgerichtet ist. Die Stabilisatoren können zum Beispiel Tenside sein und können eine elektrische Ladung tragen. Insbesondere kann es sich um anionische Tenside handeln, beispielsweise hydrophob modifizierten Polyvinylalkohol (PVA), oder Natriumdodecylsulfat (SDS).

Alternative Stabilisatoren, die in den hierin beschriebenen Verfahren eingesetzt werden können, sind dem Fachmann bekannt und schließen beispielsweise andere bekannte Tenside oder hydrophob modifizierte polare Polymere ein. Mittels der eingesetzten Stabilisatoren lassen sich in den erfindungsgemäßen Verfahren in dem Emulgierungs- und ggf. Homogenisierungsschritt Miniemulsionströpfchen herstellen, die stabilisiert sind und daher im Folgenden als "stabilisierte Miniemulsionströpfchen" bezeichnet werden.

Dementsprechend können die hierin beschriebenen Mischungen in manchen Ausführungsformen auch weitere Schutzkolloide, wie zum Beispiel Polyvinylalkohole, insbesondere hydrophob modifizierte Polyvinylalkohole, Cellulosederivate oder Vinylpyrrolidone enthalten. Eine detaillierte Beschreibung solcher Verbindungen findet man z. B. in Houben-Weyl, Methoden der Organischen Chemie, Bd. 14/1, Makromolekulare Stoffe, Georg-Thieme-Verlag, Stuttgart, 1961, Seiten 411-420.

Die Gesamtmenge an Stabilisator/Tensid beträgt typischerweise bis zu 30 Gew.-%, vorzugsweise 0,1 bis 10 Gew.-%, noch bevorzugter 0,2 bis 6 Gew.-%, bezogen auf die Gesamtmenge der Monomere.

Der Stabilisator kann in Form einer wässrigen Lösung eingesetzt werden. Diese Lösung kann von der Zusammensetzung der Zusammensetzung der kontinuierlichen Phase wie oben definiert entsprechen.

Die Emulsion wird durch das Mischen der verschiedenen Bestandteile, beispielsweise mit einem Ultra-Turrax, hergestellt und ggf. anschließend homogenisiert. Die Homogenisierung und damit die Herstellung einer Miniemulsion erfolgt durch einen Hochscherprozeß, beispielsweise mittels eines Hochdruck-Homogenisators, beispielsweise mit einem Energieeintrag im Bereich von $10^3$ bis $10^5$ J pro Sekunde pro Liter Emulsion und/oder Scherraten von mindestens 1000000/s. Die Scherraten können von dem Fachmann leicht mittels bekannter Methoden bestimmt werden.

Der Hochscherprozeß, wie hierin verwendet, kann mittels jedes bekannten Verfahrens zur Dispergierung oder Emulgierung in einem Hochscherfeld erfolgen. Beispiele für geeignete Prozesse finden sich zum Beispiel in DE 196 28 142 A1, Seite 5, Zeilen 1-30, DE 196 28 143 A1, Seite 7, Zeilen 30-58, and EP 0 401 565 A1. Mittels der darin beschriebenen Verfahren erhält man stabilisierte Miniemulsionströpfchen.

Die Polymerisation der Monomerenmischung wird mit dem entsprechenden Polymerisationsverfahren, insbesondere mittels radikalischer Polymerisation durchgeführt. Für diesen Zweck können Polymerisationsinitiatoren verwendet werden. Verwendbare Initiatoren schließen beispielsweise thermisch aktivierbare, strahlungsaktivierbare, wie zum Beispiel UV Initiatoren, oder Redox-aktivierbare ein, und werden vorzugsweise aus Radikalstartern ausgewählt. Geeignete Radikalstarter sind bekannt und verfügbar und schließen organische Azo- oder PeroxoVerbindungen ein. Die Initiatoren sind vorzugsweise wasserlöslich. Wenn die Polymerisation durch einen wasserlöslichen Initiator gestartet wird, werden freie Radikale in der wässrigen Phase erzeugt und diffundieren zu der Wasser-/Monomer-Grenzfläche, um die Polymerisation in den Tröpfchen zu starten. Beispiele für geeignete Initiatoren schließen Peroxodisulfate, wie Kaliumperoxodisulfat (KPS), ein, sind aber nicht darauf beschränkt.

Die Polymerisation kann bei erhöhter Temperatur, beispielsweise einer Temperatur im Bereich von 10-90°C, vorzugsweise 20-80°C, noch bevorzugter 40-75°C und besonders bevorzugt 60-75°C erfolgen. Die Polymerisation kann über einen Zeitraum von 0,1 bis 24 h, vorzugsweise 0,5-12 h, noch bevorzugter 2-6 h erfolgen.

Der Ausdruck "ungefähr", wie hierin im Zusammenhang mit einem Zahlenwert verwendet, bezieht sich auf eine Varianz von ±20%, vorzugsweise ±10%, noch bevorzugter ±5% des entsprechenden Werts. "Ungefähr 70 °C" bedeutet somit 70 ± 14, vorzugsweise 70 ± 7, noch bevorzugter 70 ± 3,5 °C.

Die Menge an Restmonomeren kann ferner chemisch durch Post-Polymerisation, vorzugsweise durch die Verwendung von Redox-Initiatoren, wie denen, die in DE-A 44 35 423, DE-A 44 19 518 und DE-A 44 35 422 beschrieben werden, erfolgen. Geeignete Oxidationsmittel für die Post-Polymerisation schließen ein, ohne Einschränkung: Wasserstoffperoxid, t-Butylhydroperoxid, Cumolhydroperoxid oder Alkaliperoxosulfate. Geeignete Reduktionsmittel schließen ein, ohne Einschränkung: Natriumdisulfit, Natriumhydrogensulfit, Natriumdithionit, Natriumhydroxymethansulfit, Formamidinsulfinsäure, Acetonbisulfat, Ascorbinsäure and reduzierende Saccharide sowie wasserlösliche Mercaptane, wie Mercaptoethanol. Die Post-Polymerisation mit einem Redoxinitiator kann in einem Temperaturbereich von 10 bis 100°C, insbesondere 20 bis 90 °C, durchgeführt werden. Die Redoxmittel können unabhängig voneinander vollständig oder kontinuierlich über einen Zeitraum von 10 Minuten bis 4 Stunden zugegeben werden. Um die Wirksamkeit der Redoxmittel zu erhöhen, können lösliche Salze von Metallen mit unterschiedlichen Valenzen, wie Eisen-, Kupfer- oder Vanadiumsalze, zu der Reaktionsmischung zugegeben werden. Üblicherweise werden auch Komplexbildner, die die Metallsalze unter den Reaktionsbedingungen in Lösung halten, zugegeben.

Um das Molekulargewicht der Polymere zu kontrollieren, kann ein Kettenlängenregulator verwendet werden. Geeignete Verbindung sind im Stand der Technik bekannt und schließen beispielsweise verschiedene Thiole, wie z.B. 1-Dodekanthiol ein. Solche Kettenlängenregulatoren können in den notwendigen Mengen eingesetzt werden, um die Kettenlänge in gewünschtem Maß zu kontrollieren. Übliche Mengen liegen im Bereich von 0,1 bis 5 Gew.-%, vorzugsweise ungefähr 0,3 bis 2,0 Gew.-%, noch bevorzugter ungefähr 0,5 bis 1,0 Gew.-% bezogen auf die Gesamtmonomermasse.

In einem weiteren Aspekt betrifft die Erfindung die Nanokapseln die mittels des hierin beschriebenen Verfahrens erhältlich sind. Diese können, in verschiedenen Ausführungsformen, ein oder mehrere Freisetzungsmittel, insbesondere Treibmittel, einen oder mehrere Katalysatoren/Initiatoren und optional eine oder mehrere ultrahydrophobe Verbindungen enthalten. In besonders bevorzugten Ausführungsformen ist das Treibmittel Isooktan und der Katalysator/Initiator ist Zinnneodekanoat und die ultrahydrophobe Verbindung ist Hexadekan.

Aus den Nanokapseln kann der Katalysator durch eine Erhöhung der Temperatur freigesetzt werden. Dabei wird zusätzlich zu der über der $T_g$ ansteigenden Beweglichkeit der Polymerketten in der Hülle entweder die Barrierewirkung der Kapselhülle geschwächt, indem diese durch eine steigende Kompatibilität mit den verkapselten Verbindungen aufquillt und dadurch aufgeweitet wird oder, für den Fall, dass ein Treibmittel eingesetzt wird, wird bei einer Erhöhung der Temperatur über den Siedepunkt des Treibmittels die Kapselhülle aufgebrochen und der Inhalt freigesetzt. Im Zusammenhang mit den Nanokapseln und aufgrund von Wechselwirkungen mit dem Polymer kann es dabei zur Freisetzung auch erforderlich sein, eine Temperatur zu wählen, die bis zu 50°C über dem eigentlichen Siedepunkt des Treibmittels liegt.

Die hierin beschriebenen Nanokapseln können Anwendung bei der Katalyse einer Vielzahl von Prozessen, insbesondere Polymerisationsprozessen finden. Vorstellbar ist der Einsatz von titanbasierten Katalysatoren bei Kondensationsreaktionen, beispielsweise von Silanen oder silangruppen-haltigen Polymeren. Weitere Einsatzgebiete sind die Polymerisation von Epoxiden, Benzoxazinen und Metathesesystemen. Besonders bevorzugt ist der Einsatz bei vernetzenden Systemen, wie Elastomeren und insbesondere Duromeren. Generell schließen die Anwendungsfelder Klebstoffe, Dichtstoffe, Beschichtungen und Infusionsharze ein.

Ein konkretes Einsatzgebiet sind Polyurethane, die bei der Anwendung kontrolliert polymerisiert werden sollen. Dementsprechend können derartige Nanokapseln als Bestandteile von zahlreichen Zusammensetzungen, die solche Polyurethane enthalten, verwendet werden. Dabei kann es sich beispielsweise um Klebstoffe oder Beschichtungsmittel auf Polyurethanbasis handeln.

Die Zusammensetzungen, die die hierin beschriebenen Nanokapseln enthalten, enthalten daher in verschiedenen Ausführungsformen weiterhin mindestens ein Polyisocyanat oder NCO-funktionelles Präpolymer und mindestens eine Verbindung mit mindestens zwei NCO-reaktiven Gruppen, insbesondere ein Polyol. Der Katalysator katalysiert dann nach der Freisetzung die Reaktion zwischen den Isocyanat(NCO)-Gruppen und den NCO-reaktiven Gruppen, typischerweise Hydroxylgruppen, die in einer Polyaddition zu Urethangruppen reagieren. Dadurch werden aus den Monomeren bzw. Präpolymeren die Polyurethanpolymere gebildet. Es ist selbstverständlich, dass neben den oder anstelle der beschriebenen NCO-funktionellen Präpolymeren auch Präpolymere mit NCO-reaktiven Gruppen, beispielsweise OH-funktionelle Präpolymere eingesetzt werden können. Als Polyisocyanate und Polyole können alle im Zusammenhang mit der Polyurethansynthese üblicherweise eingesetzten Verbindungen verwendet werden.

Neben den beschriebenen Nanokapseln können die Zusammensetzungen selbstverständlich auch weitere übliche Inhaltsstoffe von solchen Mitteln enthalten.

Grundsätzlich sind alle im Zusammenhang mit den Nanokapseln sowie den Mitteln der Erfindung offenbarten Ausführungsformen auch auf die beschriebenen Verfahren und Verwendungen anwendbar und umgekehrt. So ist es beispielsweise selbstverständlich, dass alle hierin beschriebenen speziellen Nanokapseln in den genannten Mitteln und Verfahren anwendbar sind und wie hierin beschrieben verwendet werden können.

Die folgenden Beispiele dienen der Erläuterung der Erfindung, die Erfindung ist aber nicht darauf beschränkt.

Beispiele

*Materialien*: Alle Monomere, Methylmethacrylat (MMA, Merck, ≥ 99% stab.), Butylmethacrylat (BMA, Merck, ≥ 99% stab.), Methacrylsäure (MAA, Acros, 99.5% stab) und 1,4-Butandioldimethacrylat (BDDMA, Sigma Aldrich, 95%) wurden wie erhalten ohne weitere Aufreinigung verwendet. Natriumdodecylsulfat (SDS, Lancaster, 99%), Hexadekan (HD, Merck ≥ 99%) und der Initiator Kaliumperoxodisulfat (KPS, Merck, zur Analyse) wurden wie erhalten verwendet. Die Matrixbildenden Monomere Desmodur Z4470 (trifunktionelles Isocyanat, Bayer, 70% in Butylacetat) und Rizinusöl (Hydroxylzahl = 158 mg KOH/g, VWR International) wurden wie erhalten verwendet. Isooktan (IO, ≥ 99.5%; Carl Roth) und Dimethylzinndineodekanoat (Fomrez UL-28, Momentive, 50% in Aceton) wurden wie erhalten verwendet. Für alle Experimente wurde deionisiertes Wasser verwendet.

*Beispiel 1: Katalysatorverkapselung*

Eine Mischung der Monomere MMA (3,0g), BMA (0,4g), MAA (0,4g) und BDDMA (0-0,1g), 0.25 g Hexadekan und 0g (Ref), 0.3g (S1), 0.6g (S2), bzw. 2.0g (S3) des Dimethylzinndineodekanoats wurden in 2g (Ref), 1.7g (S1), 1.4g (S2), bzw. 0g (S3) Isooktan aufgelöst. Die Mischung wurde dann langsam in 22 g Wasser mit 0.023 g SDS als Stabilisator gegossen. Für die Präemulsion wurde die Mischung mit einem Ultra-Turrax bei 16000 U/min für 3 Minuten homogenisiert. Die Miniemulsion wurde durch Ultraschallbehandlung der Emulsion für 180 s (gepulst: 10s; 5s Pause) bei 90% Amplitude (Branson sonifier W450 Digital, 1/2" Spitze) unter Eis-Kühlung hergestellt. Die Miniemulsion wurde in einen 100 mL Rundbodenkolben gefüllt und 0.08 g KPS gelöst in 2 mL Wasser zugegeben. Die Polymerisation wurde bei 72 °C für 5 h unter Rühren durchgeführt. Der Feststoffgehalt betrug 14%. Sofern nicht anders angegeben wurden die finalen Dispersionen für 24h mit deionisiertem Wasser dialysiert, um Spuren von nicht verkapseltem Material und Monomeren zu entfernen. Danach wurden die Dispersionen gefriergetrocknet, um die reinen Nanokapseln zu erhalten.

Die Dispersionen waren über mehrere Monate kolloidal stabil und Mikroskop-Aufnahmen zeigten eine gleichmäßige Größenverteilung.

Die Monomerzusammensetzungen sind in Tabelle 1 in Gew.-% bezogen auf die Gesamtmenge an Monomeren aufgelistet. Die Glasübergangstemperatur $T_g$ wurde mittels der Fox-Gleichung berechnet.

Tabelle 1: Monomerzusammensetzung (in Gew%), berechnete $T_g$ der Polymerhülle, Kapselgrößen (z-average), Verkapselungseffizienzen

|  | Ref | S1 | S2 | S3 | S4 | S5 |
|---|---|---|---|---|---|---|
| MMA [Gew%] | 76,9 | 76,9 | 76,9 | 76,9 | 79,0 | 78,2 |
| BMA [Gew%] | 10,3 | 10,3 | 10,3 | 10,3 | 10,5 | 10,4 |
| MAA [Gew%] | 10,3 | 10,3 | 10,3 | 10,3 | 10,5 | 10,4 |
| BDDMA [Gew%] | 2,5 | 2,5 | 2,5 | 2,5 | 0 | 1 |
| Katalysator [Gew%] | 0 | 15 | 30 | 100 | 15 | 15 |
| $T_g^{1}$ [°C] | 106 | 109 | 103 | 100 | 109 | 116 |
| Kapseldurchmesser[2] [nm] | 193 | 192 | 204 | 197 | 223 | 191 |
| EE$_{Isooktan}$ [%] | 85 | 81 | 87 | - | 83 | 92 |
| EE$_{Katalysator}$ [%] | - | 81 | 85 | 80 | 106 | 88 |

[1] berechnet mittels Fox-Gleichung;
[2] z-average (Durchmesser) bestimmt mittels Dynamic Light Scattering (DLS)

Der Feststoffgehalt (SC) wurde gravimetrisch mittels Gefriertrocknung der Proben bestimmt. Vorher wurde der theoretische Feststoffgehalt einschließlich Isooktan als flüchtiger Komponente berechnet. Aufgrund der Bestimmung des Feststoffgehalts mittels Gefriertrocknung, bleiben die Nanokapseln intakt und die verkapselten Inhaltsstoffe werden bei der Messung des Feststoffgehalts mitbestimmt. Unter der Annahme eines vollständigen Umsatzes bei der Polymerisation kann durch den Vergleich des praktisch gemessenen Feststoffgehalts (engl.: Solid Content) SC mit dem oben genannten theoretischen Werten die Menge an verkapseltem Katalysator und verkapseltem Isooktan berechnet werden. Der Anteil an verkapseltem Isooktan bzw. Katalysator im Vergleich zur Einsatzmenge bei der Synthese wird in Tabelle 1 als Verkapselungseffizienz (engl.: Encapsulation Efficiency) EE in Prozent angegeben.

Die Katalysatormenge wurde mittels Röntgenfluoreszenz Spektroskopie (RFA) unter Verwendung eines Axios Advanced, Fa. Panalytical (WD-RFA) X-ray Fluoreszenzspektrometers, ausgestattet mit einem LiF200 Kristall, einem 300 μm Kollimator und einem Scintillationszähler als Detektor bei 60 kV / 66 mA bestimmt. Die Messung wurde unter einem 2T-Winkel von 14.0318° durchgeführt. Die Detektion der Fluoreszenz erfolgte unter Verwendung der $K_\alpha$ Linie. Die Zinnextraktion erfolgte mit einer niedrig-schmelzenden Aufschlussmethode zur Bestimmung flüchtiger Elementspezies. Dazu wurden etwa 100mg der gefriergetrockneten Proben bei 800 °C mit einer Mischung von $LiNO_3$, $NaNO_3$ und $N_3B_4O_7$ aufgeschmolzen. Danach wurde die Mischung auf 1100°C erhitzt und Zinn quantitative extrahiert.

Die Partikelgröße wurde mittels Dynamic Light Scattering (DLS) unter Verwendung eines Malvern Instruments Zetasizer Nano bei einem Winkel von 173° (Rückstreuung) und 25°C gemessen. Für die Messung wurde die Emulsion mit deionisiertem Wasser solange verdünnt, bis eine leicht trübe Lösung erhalten wurde. Die Partikelgröße ist als Z-Mittel [nm] angegeben.

Die Ergebnisse zeigen, dass die verwendeten Zusammensetzungen den Katalysator und das Isooktan effizient verkapseln konnten.

*Beispiel 2: Herstellung der PU-Zusammensetzung*

Um die Thermolatenz der Nanokapseln zu zeigen, wurde ein PU System aus Desmodur Z4470 und Rizinusöl als Polyolkomponente eingesetzt. Dazu wurden 1 g des Rizinusöls mit 0.9945 g Desmodur Z 4470 gemischt und direkt rheologisch untersucht. Typischerweise wurden 0,1 Gew.-% Katalysator zugegeben um die Härtungszeit zu verringern. Der Katalysator wurde entweder direkt (20,98 mg) oder in Form der Nanokapseln (1 mg) zu dem Rizinusöl gegeben. Als Referenz wurden Kapseln eingesetzt, die nur Isooktan ohne Katalysator enthielten.

*Beispiel 3: DSC Messungen*

Die thermischen Eigenschaften der gefriergetrockneten Proben wurden mittels DSC mit einem Netzsch 204 F1 Phönix dynamischen Differenzkalorimeter mit Heizraten von 10K/min unter einer Stickstoffatmosphäre in einem Temperaturbereich von 20-180°C durchgeführt, wobei 5-10 mg der Kapseln verwendet wurden.

Die Messungen zeigten ein starkes endothermes Signal für die Isooktan-Referenzprobe mit einer Starttemperatur von 127°C und einer Peaktemperatur von 142°C, was auf die Verdampfung des Isooktans zurückzuführen ist. Verglichen mit der Referenz zeigten die Katalysatorproben S1, S2, S4, S5 eine leichte Verschiebung der Start- und Peaktemperaturen zu niedrigeren Werten (Tabelle 2). Da die Katalysatorprobe S3 kein Isooktan enthält, ist diese in der Versuchsreihe nicht berücksichtigt. Die Glasübergangstemperaturen der Copolymerschalen wurden in einem zweiten Heizzyklus bestimmt.

Tabelle 2: Temperaturverhalten

|  | Ref | S1 | S2 | S4 | S5 |
|---|---|---|---|---|---|
| $T_{Start}$ [°C] | 127 | 119 | 103 | 109 | 116 |
| $T_{Peak}$ [°C] | 142 | 131 | 116 | 119 | 125 |
| $T_g$[°C] | 147 | 132 | 157 | 139 | 146 |

*Beispiel 4: Bestimmung der Katalysatorwirkung*

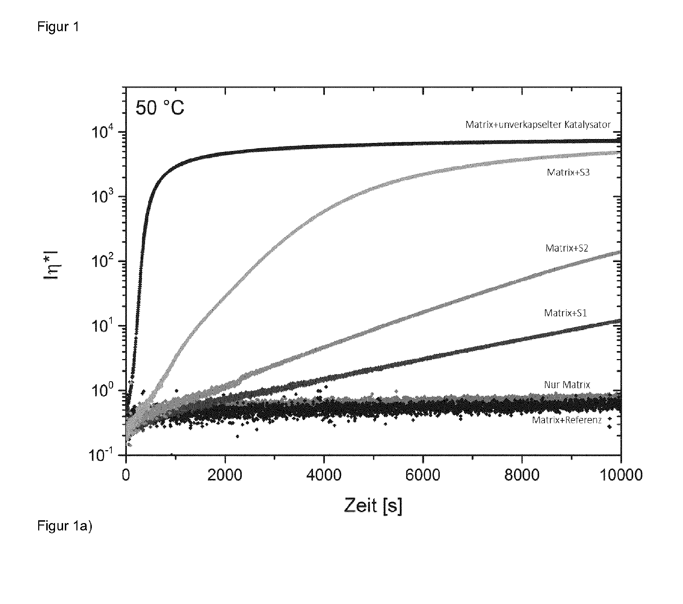

Kombinationen der in den Beispielen 1 und 2 hergestellten Nanokapseln bzw. PU-Systeme wurden rheologisch untersucht. Dazu wurden die PU-Matrix ohne Katalysator, die PU-Matrix mit dem nicht verkapselten Katalysator, die PU-Matrix mit den Isooktan-Referenzkapseln und die PU-Matrix mit den erfindungsgemäßen Kapseln im Hinblick auf ihre komplexen Viskositäten untersucht. Die Messungen wurden isothermal mit 50°C als inaktivem und 120°C als aktivem Szenario durchgeführt. Die Ergebnisse sind in Figur 1a gezeigt. Es zeigt sich, dass ohne Katalysator und im Fall der Referenzkapseln mit nur Isooktan keine Veränderung der Viskosität zu beobachten ist, d.h. keine Reaktion findet statt. Im Fall der Kapseln S1 und S2 kommt es zu einem linearen Anstieg der Viskosität mit sehr moderaten Steigungen, wobei es die Mischung noch nach mehreren Stunden verarbeitbar ist. Die Endviskosität von S2 ist dabei etwa doppelt so hoch wie die von S1, was zeigt, dass eine größere Menge Katalysator verkapselt ist, die bei höheren Temperaturen aus den Kapseln herausdiffundieren kann. Mit dem nicht verkapselten Katalysator kommt es zu einem steilen Anstieg der Viskosität, wobei das Dalquist-Kriterium schon nach 5 Minuten erreicht wird.

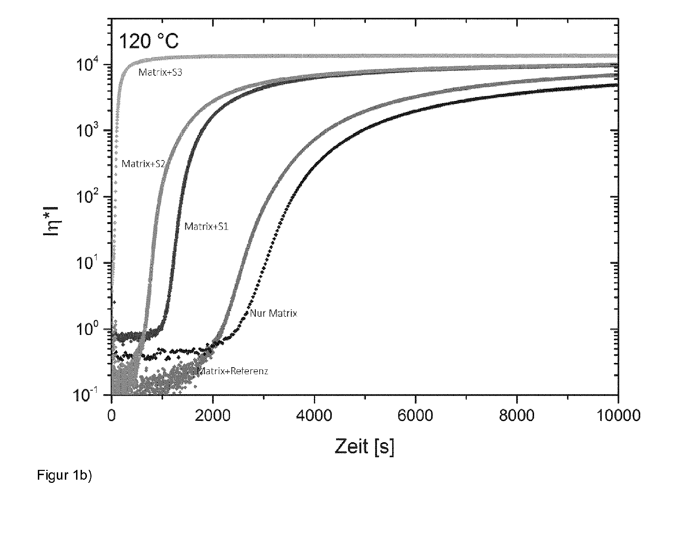

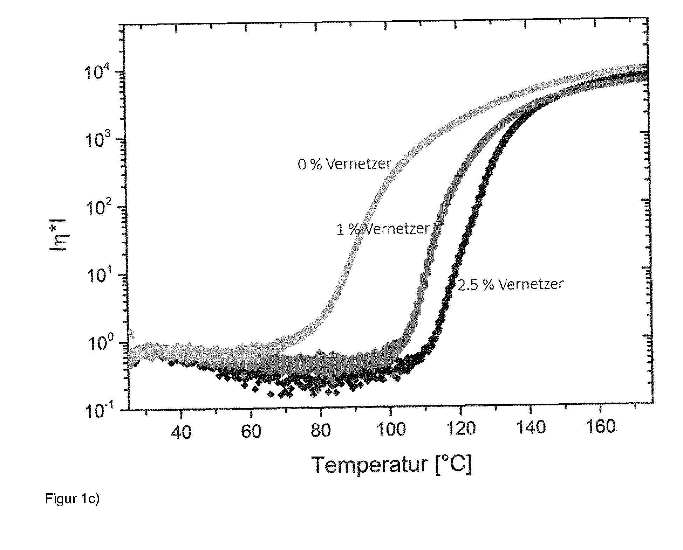

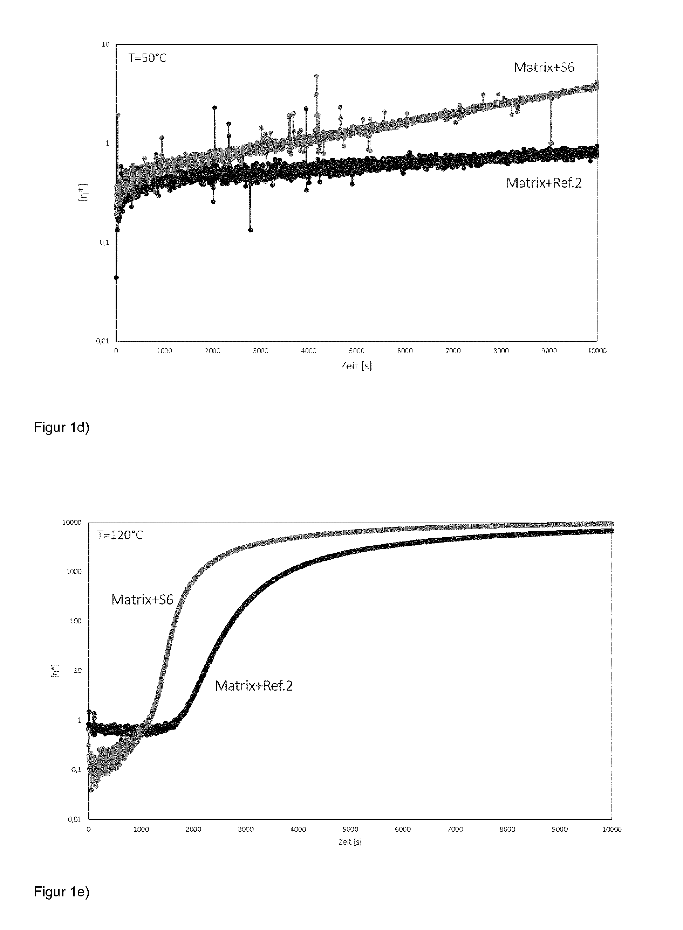

Bei einer Temperatur von 120°C (Figur 1 b) zeigt auch die reine Matrix nach 35 Minuten einen Anstieg in der Viskosität, da die Temperatur ausreichend für die Vernetzungsreaktion ist. Die Referenzkapseln zeigen ein ähnliches Verhalten. S1 und S2 zeigen nach kurzer Zeit einen steilen Anstieg der Viskosität.

In einem weiteren Experiment wurde die Temperatur kontinuierlich von Raumtemperatur auf 180°C erhöht (Figur 1 c). Es zeigt sich für S1 kein Anstieg der Viskosität bis zur Starttemperatur von 115°C wonach es zu einer schnellen Polymerisation kommt, die innerhalb von 900 Sekunden abgeschlossen ist. Die Nanokapseln S1 zeigen somit das ideale Verhalten für einen thermolatenten Katalysator. Für die Proben S4 und S5 zeigen sich Verschiebungen zu niedrigeren Starttemperaturen, was einen Einfluss der Vernetzungsdichte der Kapselhülle anzeigt.

*Beispiel 5: Bestimmung der Katalysatorwirkung in faserverstärkten Kompositen*

Die mit den S1 Kapseln hergestellten PU-Mischungen wurden zur Herstellung von faserverstärkten Kompositen verwendet. Dazu wurden 120 g der in Beispiel 4 beschriebenen Mischung mit einer Schlauchpumpe (Europump PA-ST1 Basic, IKA Labortechnik) in eine mit Glasfasern gefüllte Form gefüllt (Tabelle 3). Danach wurde die Form verschlossen und für 2,5 h bei 120 °C in einem Ofen gehärtet. Nach Abkühlen der Form wurde das vernetzte Produkt entnommen und die Homogenität der Härtung sowohl optisch als auch mittels FT-IR Spektroskopie bestimmt. Dazu wurde die Isocyanatbande bei 2300 cm$^{-1}$ an jeweils 5 Messpunkten (Mitte, sowie in allen 4 Ecken) ausgewertet. Zum Vergleich wurde ein Komposit ohne Katalysator hergestellt.

Die katalysierte Probe zeigt eine vollständige und homogene Härtung, die unkatalysierte Probe härtet nur teilweise. Dies zeigt den positiven Effekt bei der Verwendung von Nanokapseln gegenüber Mikrokapseln. Auch bei Infusionsprozessen erfolgt kein Herausfiltern der Kapseln, was mit Mikrokapseln nicht möglich ist.

Tabelle 3: Zusammensetzung der faserverstärkten Komposite

| Kapsel | Probengröße [cm x cm] | Faservolumen [%] | Flächengewicht [g/m$^2$] | Faserrichtung | Faserlagen [-] | Dicke [mm] | Grad der Härtung |
|---|---|---|---|---|---|---|---|
| S1 | 13x13 | 40 | 1012 | UD* | 3 | 4 | Vollständig |
| S1 | 13x13 | 50 | 658 | +/-45°** | 6 | 4 | Vollständig |
| Ref. | 13x13 | 40 | 1012 | UD | 3 | 4 | Teilweise, NCO Peak noch vorhanden |

* Unidirektionale Glasfaser
** Biaxial orientierte Glasfaser +/- 45°, Saertex (Art. No. V1032882)

*Beispiel 6: Katalysatorverkapselung mit Rizinusöl statt Isooktan*

Eine Mischung der Monomere MMA (3,0g), BMA (0,4g), MAA (0,4g) und 0.25 g Hexadekan und 0g (Ref.2), beziehungsweise 0.2g (S6) des Dimethylzinndineodekanoats wurden in 2.0 g (Ref.2), bzw. 1.82 g (S6) Rizinusöl aufgelöst. Die Mischung wurde dann langsam in 22 g Wasser mit 0.023 g SDS als Stabilisator gegossen. Für die Präemulsion wurde die Mischung mit einem Ultra-Turrax bei 16000 U/min für 3 Minuten homogenisiert. Die Miniemulsion wurde durch Ultraschallbehandlung der Emulsion für 180 s (gepulst: 10s; 5s Pause) bei 90% Amplitude (Branson sonifier W450 Digital, 1/2" Spitze) unter Eis-Kühlung hergestellt. Die Miniemulsion wurde in einen 100 mL Rundbodenkolben gefüllt und 0.08 g KPS gelöst in 2 mL Wasser zugegeben. Die Polymerisation wurde bei 72 °C für 5 h unter Rühren durchgeführt. Der Feststoffgehalt betrug 14%. Sofern nicht anders angegeben wurden die finalen Dispersionen für 24h mit deionisiertem Wasser dialysiert, um Spuren von nicht verkapseltem Material und Monomeren zu entfernen. Danach wurden die Dispersionen gefriergetrocknet, um die reinen Nanokapseln zu erhalten.

Die Monomerzusammensetzungen sind in Tabelle 4 in Gew.-% bezogen auf die Gesamtmenge an Monomeren aufgelistet. Die Glasübergangstemperatur $T_g$ wurde mittels der Fox-Gleichung berechnet.

Tabelle 4: Monomerzusammensetzung (in Gew%), berechnete $T_g$ der Polymerhülle, Kapselgrößen (z-average), Verkapselungseffizienzen

|  | Ref.2 | S6 |
|---|---|---|
| MMA [Gew%] | 76,9 | 76,9 |
| BMA [Gew%] | 10,3 | 10,3 |
| MAA [Gew%] | 10,3 | 10,3 |
| Katalysator [Gew%] | 0 | 10 |
| $T_g{}^1$[°C] | 109 | 109 |
| Kapseldurchmesser[2] [nm] | 205 | 160 |
| $EE_{Rizinusöl}$ [%] | 74 | 72 |

Die Dispersionen waren über mehrere Monate kolloidal stabil und Mikroskop-Aufnahmen zeigten eine gleichmäßige Größenverteilung.

*Beispiel 7: Bestimmung der Katalysatorwirkung für die Rizinusölkapseln*

Die in Beispiel 5 hergestellten Nanokapseln bzw. PU-Systeme wurden rheologisch untersucht. Dazu wurden die PU-Matrix ohne Katalysator, die PU-Matrix mit dem nicht verkapselten Katalysator, die PU-Matrix mit den Rizinusöl-Referenzkapseln und die PU-Matrix mit den erfindungsgemäßen Kapseln im Hinblick auf ihre komplexen Viskositäten untersucht. Die Messungen wurden isothermal mit 50°C als inaktivem und 120°C als aktivem Szenario durchgeführt. Die Ergebnisse sind in Figur 1d) gezeigt. Es zeigt sich, dass ohne Katalysator und im Fall der Referenzkapseln mit nur Rizinusöl keine Veränderung der Viskosität zu beobachten ist, d.h. keine Reaktion findet statt. Im Fall der Kapseln S6 kommt es zu einem linearen Anstieg der Viskosität mit sehr moderaten Steigungen, wobei es die Mischung noch nach mehreren Stunden verarbeitbar ist. Mit dem nicht verkapselten Katalysator kommt es zu einem steilen Anstieg der Viskosität, wobei das Dalquist-Kriterium schon nach 5 Minuten erreicht wird.

Bei einer Temperatur von 120°C (Figur 1e) zeigt auch die Matrix, welche die Ref.2 Kapseln enthält nach 35 Minuten einen Anstieg in der Viskosität, da die Temperatur ausreichend für die Vernetzungsreaktion ist. S6 zeigt, ähnlich wie S1, nach kurzer Zeit einen steilen Anstieg der Viskosität.

## Patentansprüche

1. Verfahren zur Herstellung von Nanokapseln enthaltend mindestens einen Polymerisationskatalysator/-initiator, **dadurch gekennzeichnet, dass** das Verfahren umfasst:

   (i) Emulgieren einer Reaktionsmischung in eine kontinuierliche wässrige Phase, insbesondere Wasser, die mindestens einen Stabilisator, insbesondere mindestens ein Tensid, umfasst, wobei die Reaktionsmischung bezogen auf das Gesamtgewicht der Reaktionsmischung umfasst:

(a) 10,0 bis 99,0 Gew.-% einer Monomerenmischung, die bezogen auf das Gesamtgewicht der Monomerenmischung umfasst:

(a1) 2,5 bis 19,0 Gew.-%, insbesondere 5,0 bis 12,0 Gew.-%, mindestens eines einfach ethylenisch ungesättigten $C_{3\text{-}5}$-Carbonsäure-Monomers;

(a2) 76,0 bis 97,5 Gew.-%, insbesondere 85,0 bis 95,0 Gew.-%, mindestens eines einfach ethylenisch ungesättigten $C_{3\text{-}5}$-Carbonsäure-$C_{1\text{-}10}$-Alkylester-Monomers;

(a3) 0,0 bis 5,0 Gew.-%, insbesondere 0,0 bis 3,0 Gew.-%, mindestens eines Monomers, das mindestens zwei ethylenisch ungesättigte Gruppen trägt, vorzugsweise eines Divinylbenzols oder eines Di- oder Triesters eines $C_{2\text{-}10}$-Polyols mit ethylenisch ungesättigten $C_{3\text{-}5}$-Carbonsäuren, insbesondere eines Di- oder Triesters eines $C_{2\text{-}10}$-Alkandiols oder -triols mit ethylenisch ungesättigten $C_{3\text{-}5}$-Carbonsäuren,

(b) 1,0 bis 70,0 Gew.-%, vorzugsweise 1,0 bis 30,0 Gew.-% mindestens eines Polymerisationskatalysators oder -initiators, vorzugsweise eines Katalysators, der die Polyadditionsreaktion von Verbindungen mit Isocyanat-Gruppen und NCO-reaktiven Gruppen zu Polyurethanen katalysiert, insbesondere eine Organozinnverbindung; und

(c) 0,0 bis 89,0 Gew.-% mindestens eines hydrophoben Freisetzungsmittels, wobei das Freisetzungsmittel vorzugsweise einen Hansen-Parameter $\delta_t$ von kleiner 20 MPa$^{1/2}$ aufweist; und

(d) 0,0 bis 10,0 Gew.-% mindestens einer vom Freisetzungsmittel verschiedenen ultrahydrophoben Verbindung, vorzugsweise eines, optional fluorierten, $C_{12\text{-}28}$-Kohlenwasserstoffs, noch bevorzugter eines $C_{14\text{-}26}$-Alkans;

(ii) optional Homogenisieren der Emulsion aus Schritt (i); und

(iii) Polymerisieren der Monomere.

2. Verfahren nach Anspruch 1, **dadurch gekennzeichnet, dass** die Monomere für die Kapselhülle derart gewählt werden, dass das aus der Monomerenmischung erhältliche Copolymer eine analog zur Fox-Gleichung berechnete theoretische Glasübergangstemperatur $T_g$ von 95°C oder mehr, insbesondere 100°C oder mehr, noch bevorzugter 105°C oder und mehr, aufweist.

3. Verfahren nach Anspruch 1 oder 2, **dadurch gekennzeichnet, dass** die gemittelte Größe der Nanokapseln im Größenbereich von 50 bis 500 nm, besonders bevorzugt 100 bis 300 nm liegt.

4. Verfahren nach mindestens einem der Ansprüche 1 bis 3, **dadurch gekennzeichnet, dass** der mindestens eine Polymerisationskatalysator/-initiator

(a) einen Hansen-Parameter $\delta_t$ von weniger als 20 MPa$^{1/2}$, vorzugsweise weniger als 19 MPa$^{1/2}$, insbesondere weniger als 15 MPa$^{1/2}$ hat; und/oder

(b) einen Hansen-Parameter $\delta_h$ von weniger als 12 MPa$^{1/2}$, vorzugsweise weniger als 10 MPa$^{1/2}$, noch bevorzugter weniger als 6 MPa$^{1/2}$, insbesondere weniger als 2 MPa$^{1/2}$ hat.

5. Verfahren nach mindestens einem der Ansprüche 1 bis 4, **dadurch gekennzeichnet, dass** das mindestens eine hydrophobe Freisetzungsmittel

(a) einen Hansen-Parameter $\delta_t$ von weniger als 19 MPa$^{1/2}$, insbesondere weniger als 15 MPa$^{1/2}$ hat; und/oder

(b) einen Hansen-Parameter $\delta_h$ von weniger als 12 MPa$^{1/2}$, vorzugsweise weniger als 10 MPa$^{1/2}$, noch bevorzugter weniger als 6 MPa$^{1/2}$, insbesondere weniger als 2 MPa$^{1/2}$ hat.

6. Verfahren nach mindestens einem der Ansprüche 1 bis 5, **dadurch gekennzeichnet, dass** der Hansen-Parameter $\delta_d$ des Polymers der Kapselhülle 15-19 MPa$^{1/2}$, vorzugsweise 16-18 MPa$^{1/2}$, noch bevorzugter ungefähr 17 MPa$^{1/2}$, der Hansen-Parameter $\delta_p$ 10-14 MPa$^{1/2}$, vorzugsweise 11-13 MPa$^{1/2}$, noch bevorzugter ungefähr 12 MPa$^{1/2}$, der Hansen-Parameter $\delta_h$ 13-17 MPa$^{1/2}$, vorzugsweise 14-16 MPa$^{1/2}$, noch bevorzugter ungefähr 15 MPa$^{1/2}$, insbesondere 15,3 MPa$^{1/2}$, und der Hansen-Parameter $\delta_t$ vorzugsweise 23-28 MPa$^{1/2}$, vorzugsweise 24-27 MPa$^{1/2}$, noch bevorzugter 25-26 MPa$^{1/2}$ beträgt.

7. Verfahren nach Anspruch 6, **dadurch gekennzeichnet, dass** die zu verkapselnde Verbindung oder Mischung und das Polymer der Kapselhülle folgende Beziehung erfüllen:

$$R_a/R_0 > 1,$$

wobei

$$(R_a)^2 = 4(\delta_{dS} - \delta_{dP})^2 + (\delta_{pS} - \delta_{pP})^2 + (\delta_{hS} - \delta_{hP})^2,$$

wobei S für die zu verkapselnde Verbindung oder Verbindungsmischung und P für das Polymer der Kapselhülle steht, wobei $R_0$ 8-15 MPa$^{1/2}$, insbesondere 10-13 MPa$^{1/2}$, vorzugsweise 11-12 MPa$^{1/2}$, noch bevorzugter ungefähr 11,3 MPa$^{1/2}$, am bevorzugtesten 11,3 MPa$^{1/2}$ ist.

8. Verfahren nach mindestens einem der Ansprüche 1 bis 7, **dadurch gekennzeichnet, dass** das mindestens eine einfach ethylenisch ungesättigte $C_3$-$C_5$-Carbonsäure-Monomer ausgewählt wird aus Methacrylsäure (MAA), Acrylsäure (AA), Fumarsäure, Methylmaleinsäure, Maleinsäure, Itaconsäure oder Mischungen von zwei oder mehr davon, insbesondere Methacrylsäure (MAA), Acrylsäure (AA) oder Mischungen davon.

9. Verfahren nach mindestens einem der Ansprüche 1 bis 8, **dadurch gekennzeichnet, dass** das mindestens eine einfach ethylenisch ungesättigte $C_{3-5}$-Carbonsäure-$C_{1-10}$-Alkylester-Monomer ein Acrylsäure- oder Methacrylsäurealkylester oder eine Mischungen davon ist.

10. Verfahren nach mindestens einem der Ansprüche 1 bis 9, **dadurch gekennzeichnet, dass** das mindestens eine ethylenisch ungesättigte $C_{3-5}$-Carbonsäure-$C_{1-10}$-Alkylester-Monomer ein Methacrylsäure-$C_1$-$C_5$-Alkylester-Mono-mer, insbesondere ein Methacrylsäuremethylester-Monomer, ein Methacrylsäure-n-butylester-Monomer oder eine Mischung daraus ist, besonders bevorzugt eine Mischung aus Methacrylsäuremethylester und Methacrylsäure-n-butylester im Gewichtsverhältnis von 3,5:1 bis 16:1, vorzugsweise 6:1 bis 16:1.

11. Verfahren nach mindestens einem der Ansprüche 1 bis 10, **dadurch gekennzeichnet, dass** der mindestens eine Di- oder Triester eines $C_{2-10}$-Polyols mit ethylenisch ungesättigten $C_3$-$C_5$-Carbonsäuren, ein Diester von Methacrylsäure oder Acrylsäure mit 1,3-Propandiol, 1,4-Butandiol oder 1,5-Pentandiol, insbesondere ein Methacrylsäureester von 1,4-Butandiol ist.

12. Verfahren nach mindestens einem der Ansprüche 1 bis 11, **dadurch gekennzeichnet, dass** der mindestens eine Stabilisator ein Tensid, vorzugsweise ein anionisches Tensid, insbesondere bevorzugt Natriumdodecylsulfat (SDS) ist.

13. Verfahren nach mindestens einem der Ansprüche 1 bis 12, **dadurch gekennzeichnet, dass** das mindestens eine Freisetzungsmittel unter Homogenisierungs- und/oder Polymerisationsbedingungen, vorzugsweise bei Raumtemperatur (20°C) und Normaldruck (1013 mbar), flüssig ist.

14. Verfahren nach mindestens einem der Ansprüche 1 bis 13, **dadurch gekennzeichnet, dass** das Freisetzungsmittel ein reaktives Freisetzungsmittel ist, das bei der Polymerisation der Kapselhülle zumindest teilweise einpolymerisiert wird, vorzugsweise ausgewählt aus langkettigen hydrophoben Polyolen und Monoalkoholen, insbesondere Rizinusöl und Cardanol und seinen Derivaten.

15. Verfahren nach mindestens einem der Ansprüche 1 bis 13, **dadurch gekennzeichnet, dass** das Freisetzungsmittel ein hydrophobes Treibmittel, vorzugsweise ein Kohlenwasserstoff, mit einem Siedepunkt von 50 bis 200°C, vorzugsweise 60 bis 150°C, noch bevorzugter 80 bis 120°C, ist, vorzugsweise ausgewählt aus $C_{6-10}$-Kohlenwasser-stoffen, bevorzugter $C_{6-10}$-Alkanen, insbesondere Isooktan.

16. Verfahren nach mindestens einem der Ansprüche 1 bis 15, **dadurch gekennzeichnet, dass** der mindestens eine Polymerisationskatalysator ausgewählt wird aus Organozinnverbindungen für die Polymerisation von Polyurethanen, insbesondere Tributylzinnneodekanoat.

17. Nanokapseln erhältlich nach einem der Ansprüche 1 bis 16.

18. Zusammensetzung enthaltend die Nanokapseln nach Anspruch 17, sowie ein polymerisierbares Harz, vorzugsweise mindestens ein Polyisocyanat oder NCO-funktionelles Präpolymer und mindestens eine Verbindung mit mindestens zwei NCO-reaktiven Gruppen, insbesondere ein Polyol.

**19.** Zusammensetzung nach Anspruch 18, **dadurch gekennzeichnet, dass** die Zusammensetzung ein Klebstoff, Dichtstoff, Infusionsharz oder Beschichtungsmittel ist.

**20.** Verwendung der Nanokapseln nach Anspruch 17 zur Polymerisation eines Polymerharzes, insbesondere von Polyurethanen.

Figur 1

Figur 1a)

Figur 1b)

Figur 1c)

Figur 1d)

Figur 1e)

Europäisches
Patentamt

European
Patent Office

Office européen
des brevets

**EUROPÄISCHER RECHERCHENBERICHT**

Nummer der Anmeldung

EP 15 18 9377

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | INES HOFMEISTER ET AL: "Controlled Formation of Polymer Nanocapsules with High Diffusion-Barrier Properties and Prediction of Encapsulation Efficiency", ANGEWANDTE CHEMIE INTERNATIONAL EDITION, Bd. 54, Nr. 1, 2. Januar 2015 (2015-01-02), Seiten 327-330, XP055250010, DE ISSN: 1433-7851, DOI: 10.1002/anie.201408393 | 1-15,17, 20 | INV. C08G18/79 B01J13/14 C08G18/24 C08G18/36 B01J35/00 |
| Y | * Seite 328, Spalte 2, Zeile 2 - Zeile 4; Tabellen 1,2 * <br> * Seite 328, Spalte 2, Zeile 18 - Zeile 21 * <br> * Seite 328, Spalte 2, Zeile 33 - Seite 329, Spalte 1, Zeile 4 * <br> & INES HOFMEISTER ET AL: "pH-Sensitive Nanocapsules with Barrier Properties: Fragrance Encapsulation and Controlled Release", MACROMOLECULES, Bd. 47, Nr. 16, 26. August 2014 (2014-08-26), Seiten 5768-5773, XP055250008, US ISSN: 0024-9297, DOI: 10.1021/ma501388w * Seite 5769, Spalte 1, Zeile 7 - Zeile 20; Tabelle 1 * <br> * Seite 5773, Zeile 22 - Zeile 28 * <br> ----- | 16,18-20 | |
| Y | EP 1 647 587 A1 (HENKEL KGAA [DE]) 19. April 2006 (2006-04-19) * Seite 7, Zeile 47 - Zeile 50; Ansprüche 2,3; Beispiel 4 * ----- | 16,18-20 | RECHERCHIERTE SACHGEBIETE (IPC) <br> C08G <br> B01J |
| A | JP S61 31482 A (DAINIPPON PRINTING CO LTD) 13. Februar 1986 (1986-02-13) * Zusammenfassung * ----- <br> -/-- | 16,18-20 | |

Der vorliegende Recherchenbericht wurde für alle Patentansprüche erstellt

| Recherchenort | Abschlußdatum der Recherche | Prüfer |
|---|---|---|
| München | 16. Februar 2016 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**Europäisches Patentamt**
**European Patent Office**
**Office européen des brevets**

## EUROPÄISCHER RECHERCHENBERICHT

**Nummer der Anmeldung**

EP 15 18 9377

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2008/300340 A1 (GROSS STEPHEN M [US] ET AL) 4. Dezember 2008 (2008-12-04) * das ganze Dokument * ----- | 16,18-20 | |
| A | JP 2003 253236 A (KOYO SANGYO CO) 10. September 2003 (2003-09-10) * das ganze Dokument * ----- | 16-20 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 16. Februar 2016 | Sütterlin, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 9377

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2016

| Im Recherchenbericht angeführtes Patentdokument | Datum der Veröffentlichung | Mitglied(er) der Patentfamilie | Datum der Veröffentlichung |
|---|---|---|---|
| EP 1647587 A1 | 19-04-2006 | AT 408659 T<br>DK 1647587 T3<br>EP 1647587 A1<br>ES 2313180 T3<br>US 2006078741 A1 | 15-10-2008<br>12-01-2009<br>19-04-2006<br>01-03-2009<br>13-04-2006 |
| JP S6131482 A | 13-02-1986 | KEINE | |
| US 2008300340 A1 | 04-12-2008 | AU 2007354338 A1<br>CA 2689031 A1<br>EP 2152224 A1<br>JP 5678319 B2<br>JP 2010528111 A<br>JP 2013049697 A<br>US 2008300340 A1<br>WO 2008147366 A1 | 04-12-2008<br>04-12-2008<br>17-02-2010<br>04-03-2015<br>19-08-2010<br>14-03-2013<br>04-12-2008<br>04-12-2008 |
| JP 2003253236 A | 10-09-2003 | KEINE | |

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19628142 A1
- DE 19628143 A1
- EP 0401565 A1
- DE 4435423 A
- DE 4419518 A
- DE 4435422 A

### In der Beschreibung aufgeführte Nicht-Patentliteratur

- **ZÖLLER et al.** *Inorganic Chem.,* 2013, vol. 52 (4), 1872-82
- **T. G. FOX.** *Bull. Am. Phys. Soc.,* 1956, vol. 1, 123
- **J. BRANDRUP ; E. H. IMMERGUT ; E. A. GRULKE.** Polymer Handbook. Wiley, 2003
- **VON HANSEN.** Hansen Solubility Parameters. A User's Handbook. Taylor & Francis Group, 2007, vol. 2
- *Angew. Chem. Int. Ed.,* 2015, vol. 54, 327-330
- **C. M. HANSEN.** Hansen Solubility. Parameters A User's Handbook. Taylor & Francis Group,, 2007, vol. 2
- **VON CHAI et al.** *Ind. Eng. Chem. Res.,* 2005, vol. 44, 5256-5258
- **HOUBEN-WEYL.** Methoden der Organischen Chemie, Bd. 14/1, Makromolekulare Stoffe. Georg-Thieme-Verlag, 1961, vol. 14-1, 411-420